(19)

**Europäisches Patentamt**
**European Patent Office**
**Office européen des brevets**

(11) **EP 4 787 723 A1**

(12) **EUROPEAN PATENT APPLICATION**
published in accordance with Art. 153(4) EPC

(43) Date of publication:
**05.08.2026 Bulletin 2026/32**

(21) Application number: **24886264.1**

(22) Date of filing: **30.10.2024**

(51) International Patent Classification (IPC):
**H04B 7/0456** (2017.01)    **H04B 7/06** (2006.01)
**H04W 72/0457** (2023.01)    **H04L 5/00** (2006.01)
**H04L 25/02** (2006.01)    **H04L 27/26** (2006.01)
**H04W 88/08** (2009.01)

(52) Cooperative Patent Classification (CPC):
**H04B 7/0456; H04B 7/06; H04L 5/00; H04L 25/02;**
**H04L 27/26; H04W 72/0457; H04W 88/08**

(86) International application number:
**PCT/KR2024/016838**

(87) International publication number:
**WO 2025/095592 (08.05.2025 Gazette 2025/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **04.11.2023 KR 20230151287**
           **29.11.2023 KR 20230170213**

(71) Applicant: **Samsung Electronics Co., Ltd.**
**Suwon-si, Gyeonggi-do 16677 (KR)**

(72) Inventor: **LEE, Dongjae**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE AND METHOD FOR DETERMINING PRECODER IN WIRELESS COMMUNICATION SYSTEM**

(57) In embodiments, a device of a digital unit (DU) is provided. The device may comprise: a transceiver; a memory for storing instructions; and a processor. The instructions, when executed by the processor, may instruct the device to: obtain a channel frequency response through reference signals from a terminal; obtain eigenvectors through eigen decomposition for the channel frequency response; obtain transform vectors by performing a two-dimensional Fourier transform on the eigenvectors; identify basis vectors among a plurality of basis vectors for an enhanced Type 2 codebook through a decision metric according to the transform vectors; determine a precoding matrix using the identified basis vectors; and transmit downlink data to which the precoding matrix is applied to the terminal through a radio unit (RU).

FIG. 3

**Description**

**[Technical Field]**

The present disclosure relates to a wireless communication system. For example, the present disclosure relates to an electronic device and a method for determining a precoder in the wireless communication system.

**[Background Art]**

In order to increase transmission/reception performance of a signal, a multiple-input multiple-output (MIMO) technology is used. A wireless communication system using the MIMO technology uses multiple antennas at both a transmitting end and a receiving end. A channel capacity of the wireless communication system using the MIMO technology may be greatly improved compared to a single antenna technology.

The above-described information may be provided as a related art for the purpose of helping understanding of the present disclosure. No argument or decision is made as to whether any of the above description may be applied as a prior art related to the present disclosure.

**[Disclosure]**

**[Technical Solution]**

In embodiments, a device of a digital unit (DU) is provided. The device may comprise a transceiver, memory storing instructions, and a processor. The instructions may cause, when executed by the processor, the device to obtain a channel frequency response through reference signals from a terminal, obtain eigen vectors through eigen decomposition for the channel frequency response, obtain transformation vectors by performing a two-dimensional (2D) Fourier transform on the eigen vectors, identify basis vectors among a plurality of basis vectors for an enhanced Type 2 codebook through a decision metric according to the transformed vectors, determine a precoding matrix using the identified basis vectors, and transmit, through a radio unit (RU) to the terminal, downlink data to which the precoding matrix is applied.

In embodiments, a terminal is provided. The terminal may include a transceiver, memory storing instructions, and a processor. The instructions may cause, when executed by the processor, the device to receive, from a network node, reference signals through the transceiver, obtain a channel frequency response through the reference signals, obtain eigen vectors through eigen decomposition for the channel frequency response, obtain transformation vectors by performing a two-dimensional (2D) Fourier transform on the eigen vectors, identify basis vectors among a plurality of basis vectors for an enhanced Type 2 codebook through a decision metric according to the transformation vectors, determine a precoding matrix using the identified basis vectors, and transmit, through the transceiver to the network node, channel state information including the precoding matrix.

In embodiments, a method performed by a digital unit (DU) is provided. The method may comprise obtaining a channel frequency response through reference signals from a terminal, obtaining eigen vectors through eigen decomposition for the channel frequency response, obtaining transformation vectors by performing a two-dimensional (2D) Fourier transform on the eigen vectors, identifying basis vectors among a plurality of basis vectors for an enhanced Type 2 codebook through a decision metric according to the transformation vectors, determining a precoding matrix using the identified basis vectors, and transmitting, through a radio unit (RU) to the terminal, downlink data to which the precoding matrix is applied.

**[Description of the Drawings]**

FIG. 1 illustrates a wireless communication system.
FIG. 2 illustrates an example of components of a base station.
FIG. 3 illustrates an example of a resource structure in a time domain and a frequency domain.
FIG. 4 illustrates an example of channels in a communication standard.
FIG. 5A illustrates codebook indices of a Type 2 codebook.
FIG. 5B illustrates a design principle of an enhanced Type 2 codebook.
FIG. 5C illustrates codebook indices of an enhanced Type 2 codebook.
FIG. 6 illustrates signal flows for channel state information (CSI) reporting.
FIG. 7 illustrates signal flows for precoding applied to downlink data.
FIG. 8A, FIG. 8B, FIG. 9A, FIG. 9B, FIG. 10A, FIG. 10B, FIG. 11A, and FIG. 11B illustrate examples of performance of precoder selection.

FIG. 12A illustrates functional components of a digital unit (DU).

FIG. 12B illustrates functional components of a radio unit (RU).

FIG. 13 illustrates functional components of a terminal.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling), a term referring to a data type (e.g., list, set, subset), a term for a calculation state (e.g., step, operation, procedure), a term referring to data (e.g., packet, user stream, information, bit, symbol, codeword), a term referring to a resource (e.g., symbol, slot, subframe, radio frame, subcarrier, resource element (RE), resource block (RB), bandwidth part (BWP), occasion), a term referring to a channel, a term referring to a network entity, a term referring to a component of a device, and the like, that are used in the following description, are exemplified for convenience of description. Therefore, the present disclosure is not limited to terms described below, and another term having an equivalent technical meaning may be used.

A term referring to a signal (e.g., signal, information, message, signaling), a term referring to a resource (e.g., symbol, slot, subframe, radio frame, subcarrier, resource element (RE), resource block (RB), bandwidth part (BWP), occasion), a term for a calculation state (e.g., step, operation, procedure), a term referring to data (e.g., packet, user stream, information, bit, symbol, codeword), a term referring to a channel, a term referring to a network entity, a term referring to a component of a device, and the like, that are used in the following description, are exemplified for convenience of description. Therefore, the present disclosure is not limited to terms described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), European Telecommunications Standards Institute (ETSI), extensible radio access network (xRAN), open-radio access network (O-RAN)), these are only examples for explanation. The various embodiments of the present disclosure may be easily modified and applied to other communication systems.

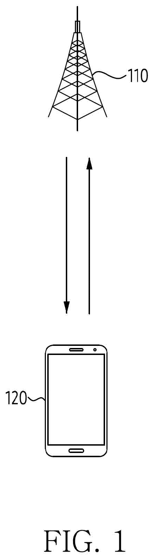

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be MTC UE or a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

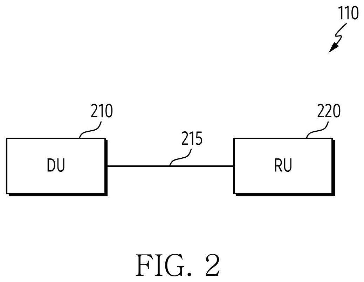

FIG. 2 illustrates examples of components of a base station. In FIG. 2, a DU and an RU in which functions of a base station are divided and implemented by different entities are described. For communication between the DU and the RU, a fronthaul interface may be used. Unlike a backhaul between a base station and a core network, the fronthaul refers to a link between entities between a wireless LAN and a base station. FIG. 2 illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2 describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. As an example, the distributed unit (DU) may include the digital unit (DU) and the radio unit (RU) of FIG. 2. In addition, as an example, between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

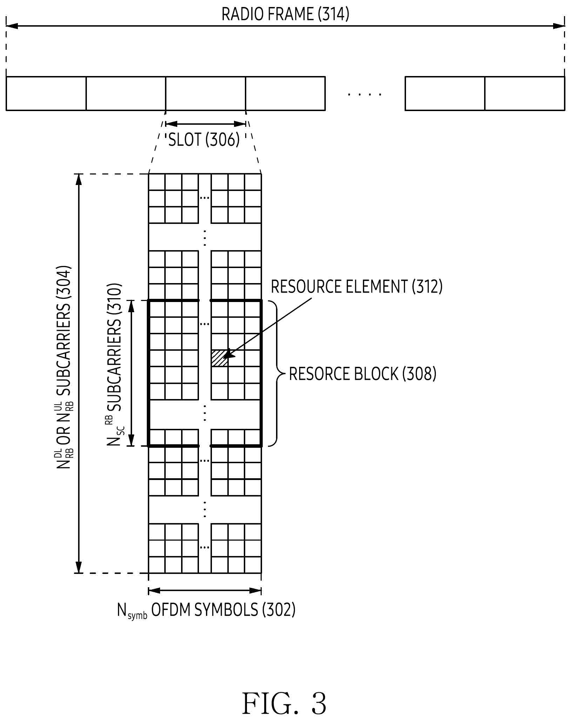

FIG. 3 illustrates an example of a resource structure in a time domain and a frequency domain. FIG. 3 illustrates a basic structure of a time-frequency domain, which is a radio resource domain in which data or a control channel is transmitted in downlink or uplink.

Referring to FIG. 3, a horizontal axis indicates the time domain and a vertical axis indicates the frequency domain. A minimum transmission unit in the time domain is an orthogonal frequency division multiplexing (OFDM) symbol, and Nsymb OFDM symbols 302 are gathered to form one slot 306. A length of the subframe is defined as 1 ms, and a length of a radio frame 314 is defined as 10 ms. A minimum transmission unit in the frequency domain may be a subcarrier.

A basic unit of a resource in the time-frequency domain is a resource element (hereinafter referred to as 'RE') 312, and may be indicated as an OFDM symbol index and a subcarrier index. A resource block may include a plurality of resource elements. In an LTE system, a resource block (RB) (or a physical resource block, hereinafter 'PRB') is defined as Nsymb consecutive OFDM symbols in the time domain and NSCRB consecutive subcarriers in the frequency domain. In an NR system, a resource block (RB) 308 may be defined as NSCRB consecutive subcarriers 310 in the frequency domain. In a wireless access network, a bandwidth configuring a resource grid may include NRBDL or NRBUL RBs 304. The NRBDL represents the number of RBs corresponding to a downlink bandwidth, and The NRBU represents the number of RBs corresponding to an uplink bandwidth. One RB 308 includes NSCRB REs 312 on a frequency axis. In general, a minimum unit of transmission of data is RB and the number of subcarriers is NSCRB=12. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than x GHz. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than yGHz. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

[Table 1]

| Channel bandwidth [MHz] | SCS | 5 | 10 | 20 | 50 | 80 | 100 |
|---|---|---|---|---|---|---|---|
| Transmission bandwidth configuration NRB | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

[Table 2]

| Channel bandwidth [MHz] | SCS | 50 | 100 | 200 | 400 |
|---|---|---|---|---|---|
| Transmission bandwidth configuration $N_{RB}$ | 60kHz | 66 | 132 | 264 | N/A |
| | 120kHz | 32 | 66 | 132 | 264 |

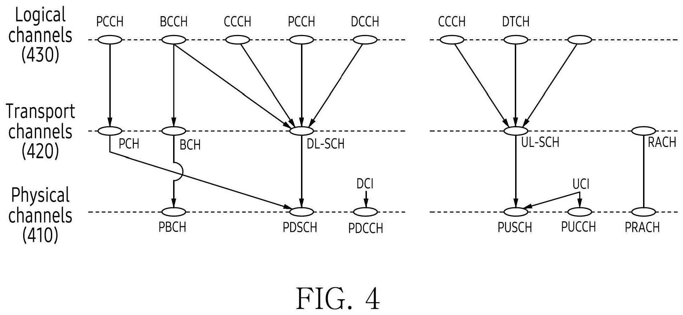

FIG. 4 illustrates an example of channels in a communication standard.

FIG. 4 illustrates an example of channels in a communication standard. The channels may include a physical channel 410, a transport channel 420, and a logical channel 430 according to layers defined in the communication standard.

Referring to FIG. 4, the physical channel 410 may provide functions (e.g., channel coding, HARQ processing, modulation, multi-antenna processing, and resource mapping) that are necessary to generate physical signals in a physical layer. In the physical layer, the physical signals are modulated in an OFDM scheme and may be transmitted in a wireless environment via a time-frequency resource (e.g., the resource of the resource grid of FIG. 3).

In downlink transmission, the physical channel 410 may include at least one of a physical broadcast channel (PBCH), a physical downlink shared channel (PDSCH), or a physical downlink control channel (PDCCH). The PDCCH may be used to carry downlink control information (DCI). In general, downlink data may refer to symbols transmitted through the PDSCH, and a downlink control signal may include symbols transmitted through the PDCCH. In addition, in a downlink, an SS/PBCH block including a synchronization signal (e.g., a primary synchronization signal (PSS), or a secondary synchronization signal (SSS)) for synchronization and a broadcast signal (e.g., PBCH) may be transmitted in addition to channels illustrated in FIG. 4. In addition, in the downlink, a channel state information-reference signal (CSI-RS) for obtaining measurement or channel information, a demodulation reference signal (DMRS) for channel estimation and demodulation, and a phase tracking reference signal (PTRS) may be transmitted.

In uplink transmission, the physical channel 410 may include at least one of a physical uplink shared channel (PUSCH), a physical uplink control channel (PUCCH), or a physical random access channel (PRACH). The PUSCH or the PUCCH may be used to carry uplink control information (UCI). In general, uplink data may refer to symbols transmitted through the PUSCH, and an uplink control signal may include symbols corresponding to the UCI. For example, the UCI may include at least one of a scheduling request (SR), a hybrid automatic request (HARQ)-acknowledge (ACK) bit(s), or channel state information (CSI). In addition, in uplink, the DMRS for channel estimation and demodulation, and the PTRS may be transmitted in the downlink for the channel estimation, in addition to the channels illustrated in FIG. 4.

The transport channel 420 may connect a physical layer and a medium access channel (MAC) layer located at a higher level of the physical layer, and may be classified according to how data is transmitted through a wireless interface. In the downlink, the transport channel 420 may include at least one of a paging channel (PCH) for paging, a broadcast channel (BCH) for broadcasting system information, and a downlink shared channel (DL-SCH) transmission of downlink data. In the uplink, the transport channel 420 may include at least one of a random access channel (RACH) for transmission of a random access preamble or an uplink shared channel (UL-SCH) for transmission of downlink data.

The logical channel 430 is located above the transport channel and is mapped to the transport channel 420. The logical channel 430 may be classified into a control channel for transmitting control area information and a traffic channel for transmitting user area information. The control channel of the logical channel 430 may include at least one of a paging control channel (PCCH), a broadcast control channel (BCCH), a common control channel (CCCH), or a dedicated control channel (DCCH). The traffic channel of the logical channel 430 may include a dedicated traffic channel (DTCH).

In describing embodiments of the present disclosure, a random access signal may include sequences transmitted through the PRACH. 'Data' may include signals that are not reference signals. As an example, in the uplink communication, 'data' obtained by a receiver may include signals transmitted through the PDSCH. However, the PDSCH is merely illustrative, and it is obvious that embodiments of the present disclosure may also be applied to channels (e.g., PUSCH, PDCCH, and PUCCH) to which a precoder may be applied.

Precoding may represent an operation applied to a signal before transmitting the signal at a transmitting end. In a wireless communication system, the signal may be transmitted on a wireless channel between the transmitting end and a receiving end. In order for the receiving end to properly receive the signal, the transmitting end may perform an operation of multiplying the signal by a specific matrix. The specific matrix may be referred to as a precoder or a precoding matrix. For example, in a 3GPP standard communication system, it is defined that a terminal 120 reports channel state information (CSI) to a base station 110. The channel state information refers to information related to a quality of a wireless channel or a wireless link formed between the terminal 120 and an antenna port (e.g., a CSI-RS port) of the base station 110. The channel state information may include a rank indicator (RI), a precoding matrix indicator (PMI), and a channel quality indicator (CQI). The RI indicates information related to a rank of a channel, and represents the number of streams that may be received by the terminal 120 through the same resource. The PMI, which is a value reflecting spatial characteristics of a channel, represents information (e.g., an index) on a precoding matrix preferred by the terminal among a plurality of candidate precoding matrices. The plurality of candidate precoding matrices are defined as a codebook, and the candidate precoding matrices of the codebook may be defined in a standard in various manners according to a codebook type.

In a 3GPP NR standard, a Type 1 codebook and a Type 2 codebook are defined. The Type 1 codebook may be divided into a single-panel codebook and a multi-panel codebook. The Type 2 codebook may be divided into a general Type 2 codebook and a Type 2 port selection codebook introduced in Release 15, and an enhanced Type 2 codebook and an enhanced Type 2 port selection codebook introduced in Release 16. Since the Type 2 codebook of Release 15 supports only up to a maximum rank of 2, the enhanced Type 2 codebook has been introduced in Release 16. The enhanced Type 2 codebook may support up to a maximum rank of 4, and in the enhanced Type 2 codebook, beam amplitude scaling and a co-phasing value (which may be referred to as beam coefficients) for all beams may be calculated in a manner similar to that of the Type 2 codebook. As a rank is extended, a feedback overhead may increase linearly according to the number of subbands. Since an uplink resource may not be sufficient, a process referred to as discrete Fourier transform (DFT) compression or frequency-domain compression may be applied to the enhanced Type 2 codebook by utilizing frequency-domain correlation of the beam coefficients.

According to the 3GPP standard, in a precoder of the enhanced Type 2 codebook, discrete Fourier transform (DFT) vectors may be utilized as basis vectors. The basis vectors may be defined as an angle of a horizontal beam and a vertical beam in a two-dimensional antenna array. The enhanced Type 2 codebook includes a subband (SB)-based precoder, however, the terminal 120 may be configured to report a limited coefficient through compression after transforming a subband domain into a lag domain, instead of reporting information on the precoder for each subband. For efficiency of uplink resources, a capacity of CSI of uplink control information (UCI) may be reduced.

The terminal 120 may determine a rank, a precoding matrix, and/or a modulation order according to mutual information (MI) or downlink throughput. For example, the terminal 120 may determine the mutual information. The terminal 120 may obtain an effective MIMO CFR matrix by multiplying a channel frequency response (CFR) matrix by the precoding matrix. In a case that a transmitter uses bit interleaved coded modulation (BICM) and a receiver uses a maximum likelihood (ML) or a linear minimum mean square error (LMMSE), the terminal 120 may obtain the mutual information from the MIMO CFR. The terminal 120 may determine the number of layers that maximize the mutual information. The number of layers may be related to the rank. The terminal 120 may determine a precoding matrix that maximizes the mutual information as a precoder. The precoder may be related to codebook indices to be reported to the base station 110. The codebook indices may be used to form a specific precoder. The terminal 120 may determine a modulation order that maximizes the mutual information. The modulation order may be related to CQI representing a modulation scheme. For example, the modulation scheme may be quadrature phase shift keying (QPSK) corresponding to a modulation order of 2, 16 quadrature amplitude modulation (QAM) corresponding to a modulation order of 4, 64 QAM corresponding to a modulation order of 6, or 256 QAM corresponding to a modulation order of 8.

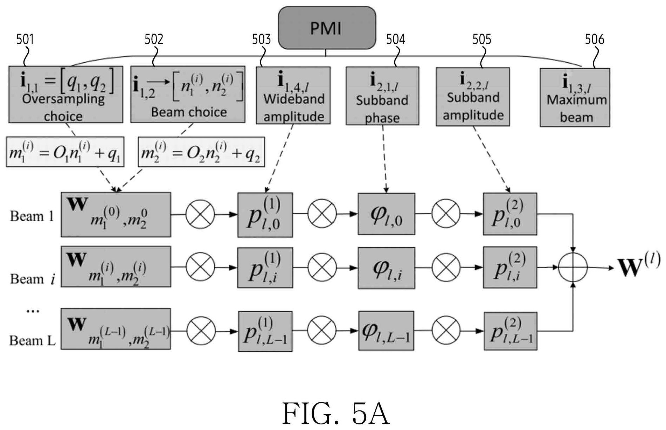

FIG. 5A illustrates codebook indices of a Type 2 codebook.

Referring to FIG. 5A, a precoding matrix of the Type 2 codebook may be indicated through a plurality of codebook indices. A precoding matrix of a layer l may be $W^{(l)}$. In order to describe the precoding matrix, the following terms may be defined. In the present disclosure, a wideband (WB) represents an entirety of a band (e.g., a BWP) of a cell being connected, and a subband (SB) may represent a subset of the WB. The subband may be configured by a network (e.g., a base station 110), and the precoding matrix of the Type 2 codebook may include components in a unit of a subband. The plurality of codebook indices may include a first codebook index ($i_{1,1}$) 501, a second codebook index ($i_{1,2}$) 502, a third codebook index ($i_{1,4,l}$) 503, a fourth codebook index ($i_{2,1,l}$) 504, a fifth codebook index ($i_{2,2,l}$) 505, and a sixth codebook index ($i_{1,3,l}$) 506. As a non-limiting example, in the fifth codebook index ($i_{2,2,l}$) 505, a report may be omitted according to a network setting.

The first codebook index ($i_{1,l}$) 501 may represent selection of oversampling. For example, a first oversampling factor of a first dimension (e.g., a horizontal dimension) may be $O_1$, and a second oversampling factor of a second dimension (e.g., a vertical dimension) may be $O_2$. The first codebook index ($i_{1,l}$) may represent the oversampling as a combination of ($o_1, o_2$), and $O_1$ may have a value equal to or greater than 0 and equal to or less than $O_1-1$, and $O_2$ may have a value equal to or greater than 0 and equal to or less than $O_2-1$. The second codebook index ($i_{1,2}$) may represent selection of a DFT beam. For example, the number of antenna ports of the first dimension (e.g., the horizontal dimension) may be $N_1$, and the number of antenna ports of the second dimension (e.g., the vertical dimension) may be $N_2$. The second codebook index ($i_{1,2}$) 502 may represent the DFT beam as a combination of ($n_1, n_2$), and $n_1$ may have a value equal to or greater than 0 and equal to or less than $N_1-1$, and $n_2$ may have a value equal to or greater than 0 and equal to or less than $N_2-1$. A combination of the first codebook index $(i_{1,1})$ and the second codebook index $(i_{1,2})$ may be represented as $(m_1, m_2)$, and a combination for an i-th beam among a total of L beams may be represented as $(m_1^{(i)}, m_2^{(i)})$. The third codebook index $(i_{1,4,l})$ 503 may represent a WB amplitude. The WB amplitude of the i-th beam may be represented as $p_{l,i}^{(1)}$. The fourth codebook index $(i_{2,1,l})$ 504 may represent a subband phase. The subband phase of the i-th beam may be represented as $\varphi_{l,i}$. The fifth codebook index $(i_{2,2,l})$ 505 may represent an SB amplitude. The SB amplitude of the i-th beam may be represented as $p_{l,i}^{(2)}$. The sixth codebook index $(i_{1,3,l})$ 506 may represent the strongest beam.

The Type 2 codebook may provide a precoding matrix of a two-stage form in which two matrices are multiplied. For example, the precoding matrix of the Type 2 codebook may have the following form.

【Equation 1】

$$W = W_1 W_2$$

W1 is a precoding matrix of a WB component, and W2 represents a precoding matrix of an SB component. Considering components represented through each codebook index, W1 may be configured by $W_{m1^{(i)}, m2^{(i)}}$ specified through the first codebook index 501 and the second codebook index 502, and $p_{l,i}^{(l)}$ specified through the third codebook index 503. On the other hand, W2 may be configured through the fourth codebook index 504 and the fifth codebook index 505.

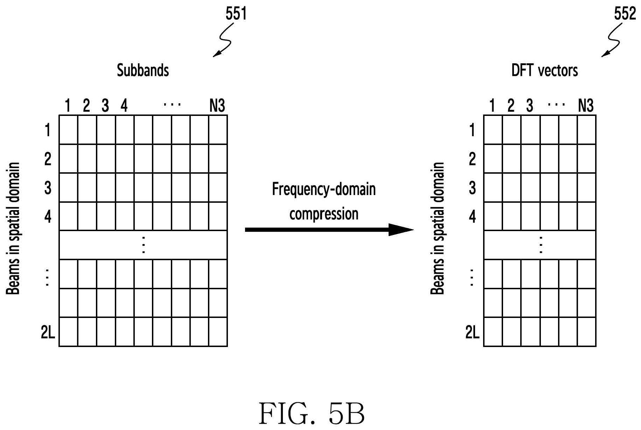

FIG. 5B illustrates a design principle of an enhanced Type 2 codebook.

Referring to FIG. 5B, a first grid 551 represents beams and subbands in a spatial domain according to the Type 2 codebook. A second grid 552 represents beams and basis vectors in a spatial domain according to the enhanced Type 2 codebook. In the second grid 552, $N_3$ subbands may be transformed into Mv basis vectors through frequency-domain compression from the first grid 551. A transformation due to the frequency-domain compression may be expressed as follows.

【Equation 2】

$$\widetilde{W_2} = W_2 W_f$$

$W_f$ represents DFT matrices for the frequency-domain compression.

A terminal 120 for which the enhanced Type 2 codebook is configured may report, to a base station 110, codebook indices related to components of $\widetilde{W_2}$ instead of components for W2. Equation 1 may be re-expressed as follows.

【Equation 3】

$$W = W_1 \widetilde{W_2} W_f{}^H$$

Together with the frequency-domain compression, by ignoring weaker beam coefficients, the number of coefficients that are not 0 (hereinafter, non-zero coefficients) may be limited.

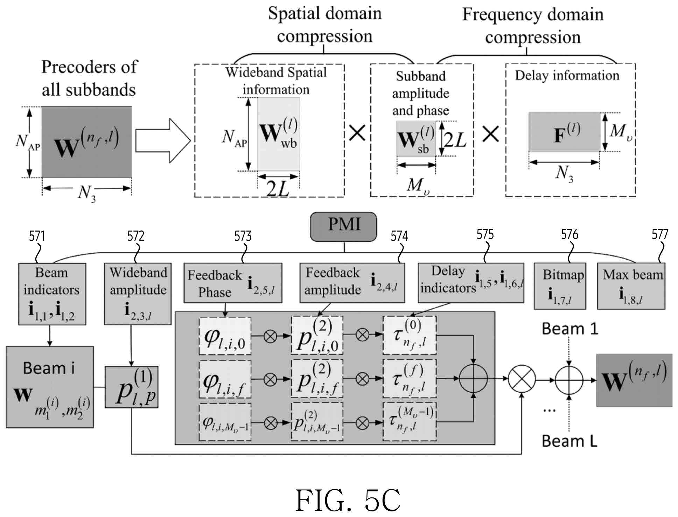

FIG. 5C illustrates codebook indices of an enhanced Type 2 codebook.

Referring to FIG. 5C, a precoding matrix of the enhanced Type 2 codebook may be indicated through a plurality of codebook indices. As in FIG. 5A, a wideband (WB) represents an entirety of a band (e.g., a BWP) of a cell being connected, and a subband (SB) may represent a subset of the WB. The precoding matrix of the enhanced Type 2 codebook may include components in a unit of a subband. For the layer l, a precoding matrix including all subbands may be $W^{(nf,l)}$. The precoding matrix may be configured with WB spatial information, SB amplitude and phase information, and delay information. When a size of the precoding matrix is $N_{AP} \times N_3$, NAP represents the number of antennas, and $N_3$ represents the number of subbands. A size of a matrix corresponding to the WB spatial information is $N_{AP} \times 2L$. A size of a matrix corresponding to the SB amplitude and phase information is $2L \times M_v$. A size of a matrix corresponding to the delay information is $M_v \times N_3$. An operation of the WB spatial information and the SB amplitude and the phase information may be understood as compression in a spatial domain. An operation of the SB amplitude and the phase information and the delay information may be understood as compression in a frequency domain.

The plurality of codebook indices may include a first codebook indices $(i_{1,1}, i_{1,2})$ 571, a second codebook index

$(i_{2,3,1})$ 572, a third codebook index $(i_{2,5,l})$ 573, a fourth codebook index $(i_{2,4,l})$ 574, a fifth codebook indices $(i_{1,5}, i_{1,6,l})$ 575, a sixth codebook index $(i_{1,7,l})$ 576, and a seventh codebook index $(i_{1,8,l})$ 577. The first codebook indices $(i_{1,1}, i_{1,2})$ 571 may represent a 2D DFT beam. The first codebook indices $(i_{1,1}, i_{1,2})$ 571 may represent a 2D DFT beam (or may be referred to as a DFT basis vector or a basis vector) expressed as $W_{m_1^{(i)}, m_2^{(i)}}$, as in the Type 2 codebook. The second codebook index $(i_{2,3,1})$ 572 may represent a WB amplitude. The WB amplitude may be represented as $p_{i,p}^{(1)}$. For example, p may represent a polarization (e.g., p=0, 1). 1 may represent a layer. The third codebook index $(i_{2,5,1})$ 573 represents a feedback phase. The feedback phase may be represented as $\Phi_{1,i,f}^{(2)}$. The fourth codebook index $(i_{2,4,1})$ 574 represents a feedback amplitude. The feedback amplitude may be represented as $p_{1,i,f}^{(2)}$. The fifth codebook indices $(i_{1,5}, i_{1,6,l})$ 575 indicate a delay according to frequency compression, and may be represented as $\tau_{nf,l}^{(f)}$. f represents one of $M_v$ basis vectors. For example, f has a value between 0 and $M_v-1$. The sixth codebook index $(i_{1,7,l})$ 576 is a bitmap, and the seventh codebook index $(i_{1,8,l})$ 577 may represent the strongest beam.

Principal component analysis (PCA) is a technique for compressing high-dimensional vectors. For example, through the PCA, the terminal 120 may obtain a plurality of eigen vectors for one entire band (e.g., an entirety of a BWP, or a wideband (WB)) and a plurality of eigen vectors for each subband. In order to describe selection of a precoder using the PCA, necessary descriptions are described below.

【Equation 4】

$$H[k,m] = \begin{bmatrix} \eta_{1,1}[k,m] & \eta_{1,2}[k,m] & \cdots & \eta_{1,N_t}[k,m] \\ \eta_{2,1}[k,m] & \eta_{2,2}[k,m] & \cdots & \eta_{2,N_t}[k,m] \\ \vdots & \vdots & \ddots & \vdots \\ \eta_{N_r,1}[k,m] & \eta_{N_r,2}[k,m] & \cdots & \eta_{N_r,N_t}[k,m] \end{bmatrix} \triangleq \begin{bmatrix} h_1[k,m], \cdots h_{N_t}[k,m] \end{bmatrix} \in \mathbb{C}^{N_r \times N_t}$$

k represents a subcarrier index, m represents an OFDM symbol index within one slot, $N_t$ represents the number of transmit antenna ports, $N_r$ represents the number of receive antenna ports, and $\eta_{r,t}[k,m]$ represents a transmit antenna port t and a receive antenna port r. H[k, m] represents a CFR matrix at the subcarrier index k and the OFDM symbol m, and $h_t[k, m]$ represents a CFR vector at the transmit antenna port t, the subcarrier index k, and the OFDM symbol m.

A new effective CFR may be defined by the CFR matrix and the precoding matrix.

【Equation 5】

$$G[k,m] = H[k,m]W[s] \triangleq \begin{bmatrix} g_1[k,m], \cdots g_B[k,m] \end{bmatrix} \in \mathbb{C}^{N_r \times B}$$

G[k,m] represents the new effective CFR matrix, and s represents a subband index.

The CFR matrix of Equation 4 may be re-expressed as follows.

【Equation 6】

$$H[k,m] = \begin{bmatrix} \eta_{1,1}[k,m] & \eta_{1,2}[k,m] & \cdots & \eta_{1,N_t}[k,m] \\ \eta_{2,1}[k,m] & \eta_{2,2}[k,m] & \cdots & \eta_{2,N_t}[k,m] \\ \vdots & \vdots & \ddots & \vdots \\ \eta_{N_r,1}[k,m] & \eta_{N_r,2}[k,m] & \cdots & \eta_{N_r,N_t}[k,m] \end{bmatrix} \triangleq \begin{bmatrix} \eta_1^H[k,m] \\ \eta_2^H[k,m] \\ \vdots \\ \eta_{N_r}^H[k,m] \end{bmatrix}$$

Herein, $\eta_r^H[k,m]$ is an r-th row vector of H[k, m].

For wideband PMI reporting, the PCA technique may be expressed as follows.

【Equation 7】

$$\Psi \triangleq \frac{1}{MKN_r}\sum_m \sum_k H^H[k,m]H[k,m] = \frac{1}{MKN_r}\sum_m \sum_k \sum_r \eta_r[k,m]\eta_r^H[k,m]$$
$$= \sum_l \lambda[l]\psi[l]\psi^H[l]$$

In Equation 7, a second equality from the top may be derived from a definition of $H[k, m]$, and a third equality may be obtained by eigen decomposition. $\lambda[l]$ is an 1-th eigen value, and may satisfy an inequality as follows.

【Equation 8】

$$\lambda[1] \geq \lambda[2] \geq \cdots \geq \lambda[\min(N_r, N_t)] \geq 0$$

$\psi[l]$ represents an eigen vector corresponding to $\lambda[l]$.

For subband PMI reporting, the PCA technique may be expressed as follows.

【Equation 9】

$$\Psi_s = \frac{1}{M|\mathcal{K}_s|N_r}\sum_m \sum_{k \in \mathcal{K}_s} \sum_r \eta_r[k,m]\eta_r^H[k,m] = \sum_l \lambda_s[l]\psi_s[l]\psi_s^H[l]$$

$\mathcal{K}_s$ represents a set of subcarrier indices corresponding to the subband s, and $|\mathcal{K}_s|$ represents a cardinality of

the set $\mathcal{K}_s$. $\lambda_s[l]$ is an 1-th eigen value of the subband s, and $\psi_s[l]$ is an eigen vector corresponding to $\lambda_s[l]$.

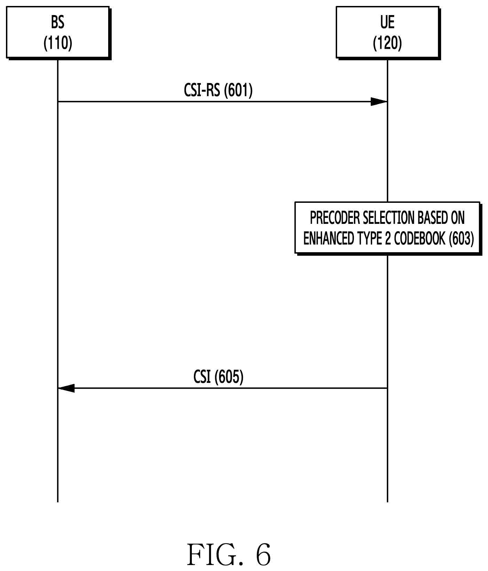

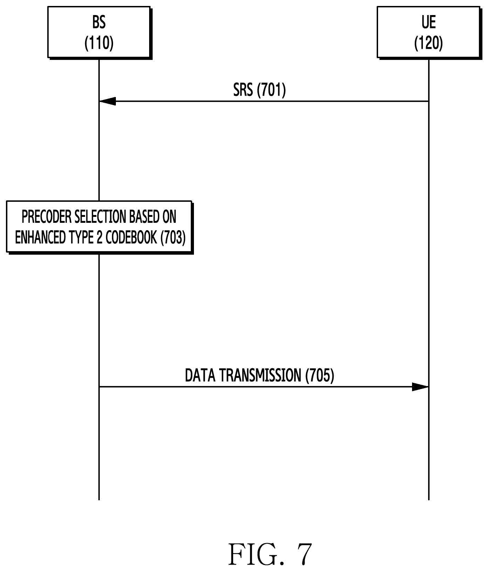

In the present disclosure, based on the PCA technique described above, techniques for determining the enhanced Type 2 precoder defined in an NR standard are described. In FIG. 6, an example in which the terminal 120 selects the enhanced Type 2 precoding matrix according to the PCA technique is described, and in FIG. 7, an example in which the base station 110 (e.g., the DU 210) selects the enhanced Type 2 precoding matrix according to the PCA technique is described.

FIG. 6 illustrates signal flows for channel state information (CSI) reporting. In FIG. 6, operations of a base station 110 may be understood as operations of a DU 210 or an RU 220. For example, an operation of transmitting a signal or an operation of receiving a signal of the base station 110 may be understood as an operation of the DU 210 through the RU 220.

Referring to FIG. 6, in operation 601, the base station 110 may transmit reference signals to a terminal 120. For example, the reference signals may include channel state information-reference signals (CSI-RSs).

In operation 603, the terminal 120 may perform precoder selection based on an enhanced Type 2 codebook. According to an embodiment, the terminal 120 may obtain eigen vectors according to a PCA technique. The terminal 120 may determine a precoding matrix of the enhanced Type 2 codebook through the eigen vectors. For example, it is assumed that the number of layers of the enhanced Type 2 codebook is 2. The terminal 120 may obtain two eigen vectors through the PCA technique. For example, the terminal 120 may obtain eigen vectors of the following equation.

【Equation 10】

$$[\psi_t[1]\quad \psi_t[2]] \approx \frac{1}{\sqrt{2N_1N_2}}\begin{bmatrix} \frac{1}{\sqrt{\gamma_{t,1}}}\sum_{i=0}^{L-1}v_{m_1^{(i)},m_2^{(i)}}p_{1,0}^{(1)}\sum_{f=0}^{M_v-1}p_{1,i,f}^{(2)}\varphi_{1,i,f}e^{j\frac{2\pi t n_{3,1}^{(f)}}{N_3}} & \frac{1}{\sqrt{\gamma_{t,2}}}\sum_{i=0}^{L-1}v_{m_1^{(i)},m_2^{(i)}}p_{2,0}^{(1)}\sum_{f=0}^{M_v-1}p_{2,i,f}^{(2)}\varphi_{2,i,f}e^{j\frac{2\pi t n_{3,2}^{(f)}}{N_3}} \\ \frac{1}{\sqrt{\gamma_{t,1}}}\sum_{i=0}^{L-1}v_{m_1^{(i)},m_2^{(i)}}p_{1,1}^{(1)}\sum_{f=0}^{M_v-1}p_{1,i+L,f}^{(2)}\varphi_{1,i+L,f}e^{j\frac{2\pi t n_{3,1}^{(f)}}{N_3}} & \frac{1}{\sqrt{\gamma_{t,2}}}\sum_{i=0}^{L-1}v_{m_1^{(i)},m_2^{(i)}}p_{2,1}^{(1)}\sum_{f=0}^{M_v-1}p_{2,i+L,f}^{(2)}\varphi_{1,i+L,f}e^{j\frac{2\pi t n_{3,2}^{(f)}}{N_3}} \end{bmatrix} + E$$

Herein, $\psi_t[1]$ and $\psi_t[2]$ are an SB eigen vector for a first layer of SB t and an SB eigen vector for a second layer of SB t, respectively. The E is an error matrix. A transmitting end (e.g., the base station 110, or the RU 220) may transmit signals through a two-dimensional antenna array. $N_1$ is the number of antenna ports in a first dimension (e.g., a horizontal domain) of the two-dimensional antenna array of the transmitting end, and $N_2$ is the number of antenna ports in a second dimension (e.g., a vertical domain) of the two-dimensional antenna array of the transmitting end. $v_{m_1^{(i)},m_2^{(i)}}$ represents an i-th basis vector configured with a 2D DFT vector in which an angle of the first dimension (e.g., the horizontal domain) corresponds to an index $m_1^{(i)}$ and an angle of the second dimension (e.g., the vertical domain) has an index $m_2^{(i)}$ (i=0,1,...,L-1). L refers to the number of basis vectors. The indices $m_1^{(i)}$ and $m_2^{(i)}$ may be expressed as follows.

【Equation 11】

$$m_1^{(i)} = n_1^{(i)} O_1 + o_1^{(i)}$$

【Equation 12】

$$m_2^{(i)} = n_2^{(i)} O_2 + o_2^{(i)}$$

When $m_1^{(i)}$ means an index of the angle of the first dimension of the i-th basis vector, $o_1^{(i)} = 0,1,...,O_1 - 1$, and $n_1^{(i)} = 0,1,...,N_1 - 1$. Also, when $m_2^{(i)}$ means an index of the angle of the second dimension of the i-th basis vector, $o_2^{(i)} = 0,1,...,O_2 - 1$, and $n_2^{(i)} = 0,1,...,N_2 - 1$. $O_1$ is an oversampling factor in the first dimension, and $O_2$ represents an oversampling factor in the second dimension. $O_1$, $O_2$, $N_1$, and $N_2$ may be configured by an RRC message of the base station 110.

In the equation, $p_{1,0}^{(1)}$ is a global gain (e.g., a WB amplitude) for SB-common, basis-common, a first layer, and a first pole, and $p_{1,1}^{(1)}$ represents a global gain (e.g., a WB amplitude) for the SB-common, the basis-common, the first layer, and a second pole. In the present disclosure, the first pole represents a first polarization, and the second pole may represent a second polarization. For example, due to a phase difference between the first pole and the second pole, a parameter of a co-phase component may be multiplied to a precoding matrix of a specific pole (e.g., the second pole). As an implementation example, poles of an transmit antenna may be disposed to be orthogonal to each other.

In the equation, $p_{2,0}^{(1)}$ is a global gain (e.g., a WB amplitude) for the SB-common, the basis-common, the second layer, and the first pole, and $p_{2,1}^{(1)}$ represents a global gain (e.g., a WB amplitude) for the SB-common, the basis-common, the second layer, and the second pole.

$M_v$ means the number of lags when the number of layers is v. The lags represent the DFT basis vectors in FIG. 5C. In the present disclosure, the lags represent the number of rows of delay information (e.g., the delay information of FIG. 5C) for partitioning in the enhanced Type 2 codebook. In the Equation 10, the number of layers may be 2. $p_{1,i,f}^{(2)}$ is an amplitude for the first layer, the first pole, a basis vector i, and a lag index f, $p_{1,i+L,f}^{(2)}$ is an amplitude for the first layer, the second pole, the basis vector i, and the lag index f, $p_{2,i,f}^{(2)}$ is an amplitude for the second layer, the first pole, the basis vector i, and the lag index f, and, $p_{2,i+L,f}^{(2)}$ is an amplitude for the second layer, the second pole, the basis vector i, and the lag index f. $\varphi_{1,i,f}$ is a phase for the first layer, the first pole, the basis vector i, and the lag index f, $\varphi_{1,i+L,f}$ is a phase for the first layer, the second pole, the basis vector i, and the lag index f, $\varphi_{2,i,f}$ is a phase for the second layer, the first pole, the basis vector i, and the lag index f, and $\varphi_{2,i+L,f}$ is a phase for the second layer, the second pole, the basis vector i, and the lag index f.

$N_3$ is the number of subbands. $n_{3,1}^{(f)}$ is a lag value corresponding to the lag index f for the first layer, and $n_{3,2}^{(f)}$ is a lag value corresponding to the lag index f for the second layer. In order to maintain power of a precoding vector for each layer as a constant value, $\gamma_{t,l}$ scaling per SB $t$ and layer 1 may be expressed as follows.

【Equation 13】

$$\gamma_{t,l} = \sum_{i=0}^{2L-1} \left( p_{l\lfloor\frac{i}{L}\rfloor}^{(1)} \right)^2 \sum_{f=0}^{M_v-1} p_{l,i,f}^{(2)} \varphi_{l,i,f} e^{j\frac{2\pi t n_{i,l}^{(f)}}{N_3}}$$

The terminal 120 may obtain L basis vectors from an eigen vector obtained through the PCA.

A 2D FFT may be performed on a WB eigen vector ($\psi[1]|_{pN2+q+1}$, $p = 0,1, \dots, N_1 - 1$, and $q = 0,1, \dots, N_2 - 1$) for the first layer and the first pole. For example, the 2D DFT may be performed based on the following equation.

【Equation 14】

$$\zeta_{m_1,m_2}^{(0)}[1] \triangleq \sum_{q=0}^{N_2-1} \sum_{p=0}^{N_1-1} \psi[1]|_{pN_2+q+1} e^{-j\frac{2\pi m_1 p}{O_1 N_1}} e^{-j\frac{2\pi m_2 q}{O_2 N_2}}$$

The 2D DFT may be performed on a WB eigen vector ($\psi[1]|_{pN2+q+N1N2+1}$) for the first layer and the second pole. For example, the 2D DFT may be performed based on the following equation.

【Equation 15】

$$\zeta_{m_1,m_2}^{(1)}[1] \triangleq \sum_{q=0}^{N_2-1} \sum_{p=0}^{N_1-1} \psi[1]|_{pN_2+q+N_1 N_2+1} e^{-j\frac{2\pi m_1 p}{O_1 N_1}} e^{-j\frac{2\pi m_2 q}{O_2 N_2}}$$

The 2D DFT may be performed on a WB eigen vector ($\psi[2]|_{pN2+q+1}$) for the second layer and the first pole. For example, the 2D DFT may be performed based on the following equation.

【Equation 16】

$$\zeta_{m_1,m_2}^{(0)}[2] \triangleq \sum_{q=0}^{N_2-1} \sum_{p=0}^{N_1-1} \psi[2]|_{pN_2+q+1} e^{-j\frac{2\pi m_1 p}{O_1 N_1}} e^{-j\frac{2\pi m_2 q}{O_2 N_2}}$$

The 2D DFT may be performed on a WB eigen vector (WB Eigen vector ($\psi[2]|_{pN2+q+N1N2+1}$) for the second layer and the second pole. For example, the 2D DFT may be performed based on the following equation.

【Equation 17】

$$\zeta_{m_1,m_2}^{(1)}[2] \triangleq \sum_{q=0}^{N_2-1} \sum_{p=0}^{N_1-1} \psi[2]|_{pN_2+q+N_1 N_2+1} e^{-j\frac{2\pi m_1 p}{O_1 N_1}} e^{-j\frac{2\pi m_2 q}{O_2 N_2}}$$

Herein, $m_1 = 0,1, \dots, O_1 N_1 - 1$, and $m_2 = 0,1, \dots, O_2 N_2 - 1$.

$O_1$ represents an oversampling factor in the first dimension, $O_2$ represents an oversampling factor in the second dimension, $N_1$ represents the number of antennas in the first dimension, and $N_2$ represents the number of antennas in the second dimension. $O_1$, $O_2$, $N_1$, and $N_2$ may be configured by an RRC message of the base station 110.

A decision metric may be generated through $\zeta_{m_1,m_2}^{(0)}[1], \zeta_{m_1,m_2}^{(1)}[1], \zeta_{m_1,m_2}^{(0)}[2], \zeta_{m_1,m_2}^{(1)}[2]$ calculated according to the above-described equations. For example, the decision metric may be generated according to the following equation.

【Equation 18】

$$\Omega(n_1, o_1, n_2, o_2) = \sum_{p=0}^{1} \omega_1 \left| \zeta_{n_1 O_1 + o_1, n_2 O_2 + o_2}^{(p)}[1] \right|^2 + \omega_2 \left| \zeta_{n_1 O_1 + o_1, n_2 O_2 + o_2}^{(p)}[2] \right|^2$$

Herein, $\omega_1$ and $\omega_2$ are design parameters. For example, $\omega_1$ may be 1, and $\omega_2$ may be 1.

For another example, the decision metric may be generated according to the following equation.

【Equation 19】

$$\Omega(n_1, o_1, n_2, o_2) = \sum_{p=0}^{1} \left| \zeta_{n_1 O_1 + o_1, n_2 O_2 + o_2}^{(p)}[1] \right|^2$$

Using $\Omega(n_1, o_1, n_2, o_2)$ defined above, $O_1 O_2$ sets may be defined as follows.

【Equation 20】

$$\mathcal{N}_{o_1, o_2} = \{(\tilde{n}_1, \tilde{n}_2) | \text{ Given } o_1 \text{ and } o_2, \ \Omega(\tilde{n}_1, o_1, \tilde{n}_2, o_2) \text{ is one of } L \text{ biggest values of } \Omega\}$$

$\Omega$ represents the decision metric exemplified in Equation 18 and Equation 19. According to the following equation, ( $o_1^\star, o_2^\star$ ) may be selected.

【Equation 21】

$$(o_1^\star, o_2^\star) = \arg\max_{(o_1, o_2)} \sum_{(n_1, n_2) \in \mathcal{N}_{o_1, o_2}} \Omega(n_1, o_1, n_2, o_2)$$

An optimal set $\mathcal{N}^\star$ may be defined as follows.

【Equation 22】

$$\mathcal{N}^\star = \mathcal{N}_{o_1^\star, o_2^\star}$$

Herein, ( $n_1^{(i)}, n_2^{(i)}$ ) represents an i-th entry of $\mathcal{N}^\star$. The index $m_1^{(i)}$ of the angle of the first dimension (e.g., the horizontal domain) and the index $m_2^{(i)}$ of the angle of the second dimension (e.g., the vertical domain) of L basis vectors may be determined as follows.

【Equation 23】

$$m_1^{(i)} = n_1^{(i)} O_1 + o_1^\star$$

【Equation 24】

$$m_2^{(i)} = n_2^{(i)} O_2 + o_2^\star$$

Eigen vectors obtained per SB $t$ may be applied to the basis vectors. The SB eigen vector $(\psi_t[1]|_{1:N1N2})$ for the first

layer and the first pole may be projected onto the determined basis *vector* $\left(v_{m_1^{(i)},m_2^{(i)}}\right)$. For example, the SB eigen vector may be projected based on the following equation.

【Equation 25】

$$\alpha_{1,i,t} = v_{m_1^{(i)},m_2^{(i)}}^{H}\psi_t[1]|_{1:N_1 N_2}$$

The SB eigen vector $(\psi_t[1]|_{1+N1N2:2N1N2})$ for the first layer and the second pole may be projected onto the determined basis vector $\left(v_{m_1^{(i)},m_2^{(i)}}\right)$. For example, the SB eigen vector may be projected based on the following equation.

【Equation 26】

$$\alpha_{1,i+L,t} = v_{m_1^{(i)},m_2^{(i)}}^{H}\psi_t[1]|_{1+N_1 N_2:2N_1 N_2}$$

The SB eigen vector $(\psi_t[2]|_{1:N1N2})$ for the second layer and the first pole may be projected onto the determined basis vector $\left(v_{m_1^{(i)},m_2^{(i)}}\right)$. For example, the SB eigen vector may be projected based on the following equation.

【Equation 27】

$$\alpha_{2,i,t} = v_{m_1^{(i)},m_2^{(i)}}^{H}\psi_t[2]|_{1:N_1 N_2}$$

The SB eigen vector $(\psi_t[2]|_{1+N1N2:2N1N2})$ for the second layer and the second pole may be projected onto the determined basis vector $\left(v_{m_1^{(i)},m_2^{(i)}}\right)$. For example, the SB eigen vector may be projected based on the following equation.

【Equation 28】

$$\alpha_{2,i+L,t} = v_{m_1^{(i)},m_2^{(i)}}^{H}\psi_t[2]|_{1+N_1 N_2:2N_1 N_2}$$

The precoding matrix for the enhanced Type 2 codebook may be approximated as follows by the eigen vectors exemplified through Equation 25 to Equation 28. Before reporting, compression of a frequency domain may not be performed.

【Equation 29】

$$
\begin{aligned}
&[\psi_t[1] \quad \psi_t[2]] \\
&\approx \frac{1}{\sqrt{2N_1 N_2}}
\begin{bmatrix}
\frac{1}{\sqrt{\sum_{i=0}^{2L-1}|\alpha_{1,i,t}|^2}}\sum_{i=0}^{L-1} v_{m_1^{(i)},m_2^{(i)}}\alpha_{1,i,t} & \frac{1}{\sqrt{\sum_{i=0}^{2L-1}|\alpha_{2,i,t}|^2}}\sum_{i=0}^{L-1} v_{m_1^{(i)},m_2^{(i)}}\alpha_{2,i,t} \\
\frac{1}{\sqrt{\sum_{i=0}^{2L-1}|\alpha_{1,i,t}|^2}}\sum_{i=0}^{L-1} v_{m_1^{(i)},m_2^{(i)}}\alpha_{1,i+L,t} & \frac{1}{\sqrt{\sum_{i=0}^{2L-1}|\alpha_{2,i,t}|^2}}\sum_{i=0}^{L-1} v_{m_1^{(i)},m_2^{(i)}}\alpha_{2,i+L,t}
\end{bmatrix}
\end{aligned}
$$

The terminal 120 may calculate mutual information through the precoding matrix and a CFR estimate. The equation assumes two layers, that is, a rank-2, but the terminal 120 may repeatedly perform calculation of the mutual information while changing a rank. For example, the terminal 120 may select a rank that maximizes the mutual information and may report PMI and CQI corresponding to the selected rank.

Unlike a case that the base station 110 determines a precoder, in a case that the terminal 120 determines a precoder to report CSI, operations such as frequency compression, quantization, and coefficient restriction may be additionally required to be performed. For example, the terminal 120 may perform FFT on coefficients per SB $t$ based on the following equation.

【Equation 30】

$$a_{l,i,u} \triangleq \frac{1}{N_3} \sum_{t=0}^{N_3 - 1} a_{l,i,t} e^{-j\frac{2\pi t u}{N_3}}$$

Herein, $i = 0,1, \dots ,2L - 1$, and $u = 0,1, \dots, N_3 - 1$. The terminal 120 may calculate the following metric.

【Equation 31】

$$\delta_{l,u} = \sum_{i=0}^{2L-1} |a_{l,i,u}|^2$$

$\delta_{l,u}$ may be sorted in descending order while fixing 1 and varying u. Among sorted vectors, first $M_v$ entries may be selected. Lag values of the entries may be represented as $u_{l,0}, u_{l,1}, \dots , u_{l,Mv}-1$.

A peak value of $|a_{l,i,u}|$ may be identified while fixing the layer l and the first pole and while varying $i = 0,1, \dots , L - 1$ and $u_{l,0}, u_{l,1}, \dots , u_{l,Mv-1}$. A position corresponding to the peak value of $|a_{l,i,u}|$ may be $\left( i_l^{(0)}, u_l^{(0)} \right)$. A peak value of $|a_{l,i,u}|$ may be identified while fixing the layer 1 and the second pole and while varying $i = L, L + 1, \dots ,2L - 1$ and $u = u_{l,0}, u_{l,1}, \dots , u_{l,Mv-1}$. A position corresponding to the peak value of $|a_{l,i,u}|$ may be $\left( i_l^{(1)}, u_l^{(1)} \right)$. A variable $b_{l,i,f}$ may be initialized as follows.

【Equation 32】

$$b_{l,i,f} = 0$$

Herein, $l = 1, \dots , v, i = 0,1, \dots ,2L - 1$ , and f = 0,1, $\dots , M_v - 1$.

For example, $\left| a_{l,i_l^{(0)},u_l^{(0)}} \right|$ corresponding to the layer 1 and the first pole may be greater than $\left| a_{l,i_l^{(1)},u_l^{(1)}} \right|$ corresponding to the layer 1 and the second pole. In this case, the variable $b_{l,i,f}$ and the position may be determined according to the following equations.

【Equation 33】

$$b_{l,i,f} = a_{l,i,u_{l,f}} / \left| a_{l,i_l^{(0)},u_l^{(0)}} \right| \ , \ i = 0,1,\dots,2L - 1 \ , \ f = 0,1,\dots,M_v - 1$$

【Equation 34】

$$(i_l^*, u_l^*) = \left( i_l^{(0)}, u_l^{(0)} \right)$$

For example, $\left| a_{l,i_l^{(0)},u_l^{(0)}} \right|$ corresponding to the layer 1 and the first pole may be less than or equal to $\left| a_{l,i_l^{(1)},u_l^{(1)}} \right|$ corresponding to the layer l and the second pole. In this case, the variable $b_{l,i,f}$ and the position may be determined according to the following equations.

【Equation 35】

$$ b_{l,i,f} = a_{l,i,u_{l,f}} / \left| a_{l,i_l^{(0)},u_l^{(0)}} \right| \quad , \quad i = 0,1,\dots,2L-1 \quad , \quad f = 0,1,\dots,M_v - 1 $$

【Equation 36】

$$ (i_l^\star, u_l^\star) = \left( i_l^{(0)}, u_l^{(0)} \right) $$

$f_l^{(0)}$ is the lag f for the layer l satisfying $u_{l,f_l^{(0)}} = u_l^{(0)}$ , and $f_l^{(1)}$ is the lag f for the layer l satisfying $u_{l,f_l^{(1)}} = u_l^{(1)}$ .

In order to quantize the global gain, the following tables may be defined.
Table 3 is a table listing p1 values defined in a standard.

[Table 3]

| Index | p1 |
|---|---|
| 1 | 1 |
| 2 | 0.840896 |
| 3 | 0.707107 |
| 4 | 0.594604 |
| 5 | 0.5 |
| 6 | 0.420448 |
| 7 | 0.353553 |
| 8 | 0.297302 |
| 9 | 0.25 |
| 10 | 0.210224 |
| 11 | 0.176777 |
| 12 | 0.148651 |
| 13 | 0.125 |
| 14 | 0.105112 |
| 15 | 0.088388 |

Table 4 is a table listing p2 values defined in a standard.

[Table 4]

| Index | p1 |
|---|---|
| 1 | 1 |
| 2 | 0.840896 |
| 3 | 0.707107 |
| 4 | 0.594604 |

(continued)

| Index | p1 |
|---|---|
| 5 | 0.5 |
| 6 | 0.420448 |
| 7 | 0.353553 |
| 8 | 0.297302 |
| 9 | 0.25 |
| 10 | 0.210224 |
| 11 | 0.176777 |
| 12 | 0.148651 |
| 13 | 0.125 |
| 14 | 0.105112 |
| 15 | 0.088388 |

Table 5 is a table obtained by multiplying the p1 value and the p2 value defined in the standard with each other in an arbitrary combination and listing in order of magnitude. Table 4 has a total of 29 values.

[Table 5]

| Index | $p1 \times p2$ |
|---|---|
| 1 | 1 |
| 2 | 0.840896 |
| 3 | 0.707107 |
| 4 | 0.594604 |
| 5 | 0.5 |
| 6 | 0.420448 |
| 7 | 0.353553 |
| 8 | 0.297302 |
| 9 | 0.25 |
| 10 | 0.210224 |
| 11 | 0.176777 |
| 12 | 0.148651 |
| 13 | 0.125 |
| 14 | 0.105112 |
| 15 | 0.088388 |
| 16 | 0.074325 |
| 17 | 0.0625 |
| 18 | 0.052556 |
| 19 | 0.044194 |
| 20 | 0.037163 |
| 21 | 0.03125 |
| 22 | 0.026278 |
| 23 | 0.022097 |

(continued)

| Index | $p1 \times p2$ |
|-------|----------------|
| 24 | 0.018581 |
| 25 | 0.015625 |
| 26 | 0.013139 |
| 27 | 0.011049 |
| 28 | 0.009291 |
| 29 | 0.007813 |

'Thre1' listed in Table 6 is an average value of two adjacent values of Table 5.

[Table 6]

| Index | Thre1 |
|-------|-------|
| 1 | 0.920448 |
| 2 | 0.774002 |
| 3 | 0.650855 |
| 4 | 0.547302 |
| 5 | 0.460224 |
| 6 | 0.387001 |
| 7 | 0.325428 |
| 8 | 0.273651 |
| 9 | 0.230112 |
| 10 | 0.1935 |
| 11 | 0.162714 |
| 12 | 0.136825 |
| 13 | 0.115056 |
| 14 | 0.09675 |
| 15 | 0.081357 |
| 16 | 0.068413 |
| 17 | 0.057528 |
| 18 | 0.048375 |
| 19 | 0.040678 |
| 20 | 0.034206 |
| 21 | 0.028764 |
| 22 | 0.024188 |
| 23 | 0.020339 |
| 24 | 0.017103 |
| 25 | 0.014382 |
| 26 | 0.012094 |
| 27 | 0.01017 |
| 28 | 0.008552 |

Table 7 is an average value of two adjacent values of Table 4.

[Table 7]

| Index | Thre2 |
|---|---|
| 1 | 0.853553 |
| 2 | 0.603553 |
| 3 | 0.426777 |
| 4 | 0.301777 |
| 5 | 0.213388 |
| 6 | 0.150888 |
| 7 | 0.106694 |

Using the value $b_{l,i_l^{(0)},f_l^{(0)}}$ for the layer I and the first pole, and the value $b_{l,i_l^{(1)},f_l^{(1)}}$ for the layer 1 and the second pole, a global gain per layer and per pole may be calculated. For example, when a value of $p_1 \times p_2(15)$ is 0.088388, ($p1,p2$) that makes the value may have the following eight combinations: (0.088388,1), (0.125,0.717107), (0.176777,0.5), (0.25,0.353553), (0.353553,0.25), (0.5,0.176777), (0.717107,0.125), (1,0.088388).

If $\left|b_{l,i_l^{(0)},f_l^{(0)}}\right| > \left|b_{l,i_l^{(1)},f_l^{(1)}}\right|$, p1 and p2 representing $b_{l,i_l^{(0)},f_l^{(0)}}$ become 1 and 1 as a unique solution. For example, if $\left|b_{l,i_l^{(1)},f_l^{(1)}}\right| = 0.088388$ methods capable of representing $\left|b_{l,i_l^{(1)},f_l^{(1)}}\right|$ may be the previous eight combinations as solutions. If p_1 is 1, p_2 becomes 0.088388.

However, since p_1 is a global gain for the second pole, when $(i,f) \neq \left(i_l^{(1)}, f_l^{(1)}\right)$ for the layer 1 and the second pole, a quantized minimum value of $b_{l,i,f}$ inevitably becomes 0.088388. Note that the minimum value of p_2 is 0.088388. In order to represent values for the layer 1 and the second pole over a wide range, p_1 of $\left|b_{l,i_l^{(1)},f_l^{(1)}}\right|$ should be minimized, and becomes p_1=0.088388 capable of minimizing a quantization loss to the maximum extent. Then, the quantized minimum value of $b_{l,i,f}$ for the layer 1 and the second pole may be 0.088388[2]. If $\left|b_{l,i_l^{(1)},f_l^{(1)}}\right|$ is between 0.088388 and 0.105112 = $p_1 \times p_2(14)$ and is close to 0.088388, it may be mapped to 0.105112 = $p_1 \times p_2(14)$, and if $\left|b_{l,i_l^{(1)},f_l^{(1)}}\right|$ is between 0.088388 and 0.074325 = $p_1 \times p_2(16)$ and is close to 0.088388, it may be mapped to $p_1$ = 0.088388. The global gain may be identified according to as a logic as above. For example, the identification of the global gain may be expressed as the following code.

【Table 8】

```
If |a_{l,i_l^{(0)},u_l^{(0)}}| > |a_{l,i_l^{(1)},u_l^{(1)}}|,

    p_{l,0}^{(1)} = 1; k_{l,0}^{(1)} = 15;

    p_{l,1}^{(1)} = p1(15); k_{l,1}^{(1)} = 1;

    for k = 1:28

        If |b_{l,i_l^{(1)},f_l^{(1)}}| ≥ Thre1(k) && k ≤ 15,

            p_{l,1}^{(1)} = p1(k); k_{l,1}^{(1)} = 15 - k + 1; break;

        else if |b_{l,i_l^{(1)},f_l^{(1)}}| ≥ Thre1(k) && k > 15,

            p_{l,1}^{(1)} = p1(15 - (k - 15)%2); k_{l,1}^{(1)} = (k - 15)%2 + 1; break;

        end

    end

else

    p_{l,1}^{(1)} = 1; k_{l,1}^{(1)} = 15;

    p_{l,0}^{(1)} = p1(15); k_{l,0}^{(1)} = 1;

    for k = 1:28

        If |b_{l,i_l^{(0)},f_l^{(0)}}| ≥ Thre1(k) && k ≤ 15,

            p_{l,0}^{(1)} = p1(k); k_{l,0}^{(1)} = 15 - k + 1; break;

        else if |b_{l,i_l^{(0)},f_l^{(0)}}| ≥ Thre1(k) && k > 15,

            p_{l,0}^{(1)} = p1(15 - (k - 15)%2); k_{l,0}^{(1)} = (k - 15)%2 + 1; break;

        end

    end

end
```

In Table 8, $k_{l,0}^{(1)}$ and $k_{l,1}^{(1)}$ are indices respectively referring to quantized $p_{l,0}^{(1)}$ and $p_{l,1}^{(1)}$ .

Not only the global gain but also an amplitude per lag may be quantized. For the layer l and the first pole, a first value may be obtained by dividing $||b_{l,i,f}|$ by $p_{l,0}^{(1)}$ . For the layer l and the second pole, a second value may be obtained by dividing $|b_{l,i,f}|$ by $p_{l,1}^{(1)}$ . An amplitude for the layer l and the first pole may be quantized to a value closest to the first value among the p2 values of Table 2. An amplitude for the layer l and the second pole may be quantized to a value closest to the second value among the p2 values of Table 2. For example, an amplitude for the first pole may be expressed as the following code.

【Table 9】

$$i = 0,1, \ldots, L - 1, \quad f = 0,1, \ldots, M_v - 1$$

$$p_{l,i,f}^{(2)} = p2(8); \quad k_{l,i,f}^{(2)} = 0:$$

$$\text{for } k = 1:7$$

$$\text{If } |b_{l,i,f}|/p_{l,0}^{(1)} \geq \text{Thre2}(k)$$

$$p_{l,i,f}^{(2)} = p2(k); k_{l,i,f}^{(2)} = 8 - k; \text{break};$$

$$\text{end}$$

$$\text{end}$$

For example, an amplitude for the second pole may be expressed as the following code.

【Table 10】

$$i = L, L + 1, \ldots, 2L - 1, \quad f = 0,1, \ldots, M_v - 1$$

$$p_{l,i,f}^{(2)} = p2(8); \quad k_{l,i,f}^{(2)} = 0:$$

$$\text{for } k = 1:7$$

$$\text{If } |b_{l,i,f}|/p_{l,1}^{(1)} \geq \text{Thre2}(k)$$

$$p_{l,i,f}^{(2)} = p2(k); k_{l,i,f}^{(2)} = 8 - k; \text{break}:$$

$$\text{end}$$

$$\text{end}$$

For PMI reporting, a phase per lag may also be quantized.

【Equation 37】

$$c_{l,i,f} = \text{round}\left(\frac{16}{2\pi} \angle b_{l,i,f}\right), \quad i = 0,1, \ldots, 2L - 1, \quad f = 0,1, \ldots, M_v - 1$$

In a lag domain, a non-zero coefficient may be limited. For the given layer l, $|b_{l,i,f}|$ may be sorted in descending order while varying i and f. Among the sorted $b_{l,i,f}$, $K_0$ of $|b_{l,i,f}|$s having the largest values may be selected. For all layers ($l = 1,2, \ldots, v$), by repeating the above-described procedure, the terminal 120 may obtain a total of $vK_0$ entries. The terminal 120 may sort the total of $vK_0$ entries in descending order. $\min(vK_0, 2K_0)$ entries having the largest values may be selected, and each index may be stored as follows.

**EP 4 787 723 A1**

【Equation 38】

$$\left(l_1^{(NZ)}, i_1^{(NZ)}, f_1^{(NZ)}\right), \quad \left(l_2^{(NZ)}, i_2^{(NZ)}, f_2^{(NZ)}\right), \quad \cdots \quad , \quad \left(l_{\min(vK_0,2K_0)}^{(NZ)}, i_{\min(vK_0,2K_0)}^{(NZ)}, f_{\min(vK_0,2K_0)}^{(NZ)}\right)$$

Now, an SB precoder may be determined using coefficients of the quantized limited number and the WB basis vector. A variable $g_{l,i,f}$ may be initialized as follows.

【Equation 39】

$$g_{l,i,f} = 0$$

Herein, $l = 1, \dots, v$, $i = 0,1, \dots, 2L-1$ and $f = 0,1, \dots, M_v - 1$. And $\min(vK_0, 2K_0)$ entries obtained above may be applied as follows.

【Equation 40】

$$g_{l_k^{(NZ)}, i_k^{(NZ)}, f_k^{(NZ)}} = p_{l_k^{(NZ)}, i_k^{(NZ)}, f_k^{(NZ)}}^{(2)} e^{j \frac{2\pi c_{l_k^{(NZ)}, i_k^{(NZ)}, f_k^{(NZ)}}}{16}}$$

The precoding matrix for the enhanced Type 2 codebook may be determined as follows.

【Equation 41】

$$[\psi_t[1] \quad \psi_t[2]]$$
$$\approx \frac{1}{\sqrt{2N_1 N_2}} \begin{bmatrix} \frac{1}{\sqrt{\gamma_{t,1}}} \sum_{i=0}^{L-1} v_{m_1^{(i)}, m_2^{(i)}} p_{1,0}^{(1)} \sum_{f=0}^{M_v-1} g_{1,i,f} e^{j\frac{2\pi t\left(n_{3,1}^{(f)} - n_{3,1}^{(f_1)}\right)}{N_3}} & \frac{1}{\sqrt{\gamma_{t,2}}} \sum_{i=0}^{L-1} v_{m_1^{(i)}, m_2^{(i)}} p_{2,0}^{(1)} \sum_{f=0}^{M_v-1} g_{2,i,f} e^{j\frac{2\pi t\left(n_{3,2}^{(f)} - n_{3,2}^{(f_2)}\right)}{N_3}} \\ \frac{1}{\sqrt{\gamma_{t,1}}} \sum_{i=0}^{L-1} v_{m_1^{(i)}, m_2^{(i)}} p_{1,1}^{(1)} \sum_{f=0}^{M_v-1} g_{1,i+L,f} e^{j\frac{2\pi t\left(n_{3,1}^{(f)} - n_{3,1}^{(f_1)}\right)}{N_3}} & \frac{1}{\sqrt{\gamma_{t,2}}} \sum_{i=0}^{L-1} v_{m_1^{(i)}, m_2^{(i)}} p_{2,1}^{(1)} \sum_{f=0}^{M_v-1} g_{2,i+L,f} e^{j\frac{2\pi t\left(n_{3,2}^{(f)} - n_{3,2}^{(f_2)}\right)}{N_3}} \end{bmatrix}$$

【Equation 42】

$$\gamma_{t,l} = \sum_{i=0}^{2L-1} \left(p_{l,\lfloor\frac{i}{L}\rfloor}^{(1)}\right)^2 \sum_{f=0}^{M_v-1} g_{l,i,f} e^{j\frac{2\pi t\left(n_{3,l}^{(f)} - n_{3,l}^{(f_l)}\right)}{N_3}}$$

The terminal 120 may calculate the mutual information through the calculated precoding matrix and the CFR estimate. For example, the terminal 120 may repeatedly perform calculation of the mutual information while changing a rank. For example, the terminal 120 may select a rank that maximizes the mutual information and may report PMI and CQI corresponding to the selected rank. In the above-described examples, the rank-2 has been assumed, but this is only an example and should not be construed as limiting other embodiments of the present disclosure. For example, embodiments of the present disclosure may be applied not only to ranks 1, 3, and 4 specified in the standard, but also to 5, 6, 7, and 8.

FIG. 7 illustrates signal flows for precoding applied to downlink data. In FIG. 7, operations of a base station 110 may be understood as an operation of a DU 210 or an RU 220. For example, an operation of transmitting or receiving a signal of the base station 110 may be understood as an operation of the DU 210 through the RU 220. An operation of selecting a precoder of the base station 110 may be understood as an operation of the DU 210. In FIG. 7, it is assumed that channel reciprocity is satisfied in a radio channel between the base station 110 and a terminal 120. For example, signals on the radio channel may be transmitted or received in a TDD frequency band.

Referring to FIG. 7, in operation 701, the terminal 120 may transmit SRSs to the base station 110.

In operation 703, the base station 110 may perform precoder selection based on an enhanced Type 2 codebook. According to an embodiment, the base station 110 may obtain eigen vectors according to a scheme. The base station 110 may determine a precoding matrix for the enhanced Type 2 codebook through the eigen vectors. For example, the base station 110 may determine the precoding matrix according to the method described in Equation 10 to Equation 29. Meanwhile, in a case that the base station 110 intends to determine the enhanced Type 2 codebook, since a separate report is not required, compression, quantization, and/or limitation of the number of non-zero coefficients are unnecessary. Therefore, the operation process of Equation 30 to Equation 42 may be omitted. As a non-limiting example, determining the precoding matrix through the method of Equation 30 to Equation 42 may also be understood as an embodiment of the present disclosure.

In operation 705, the base station 110 may perform data transmission to the terminal 120. The base station 110 may apply a precoding matrix according to the precoder selection to transmission data. For example, the transmission data may include transmission streams per antenna. The base station 110 may multiply a transmission vector including the transmission streams by the precoding matrix. The base station 110 may transmit a result of the multiplication to the terminal 120 through a plurality of antennas.

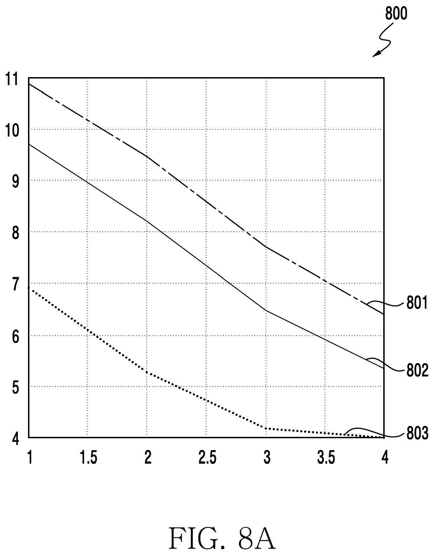

FIG. 8A, FIG. 8B, FIG. 9A, FIG. 9B, FIG. 10A, FIG. 10B, FIG. 11A, and FIG. 11B illustrate examples of performance of precoder selection.

Referring to FIG. 8A, a graph 800 represents a throughput according to the number of layers. A horizontal axis of the graph 800 represents the number of layers. A vertical axis of the graph 800 represents a throughput (unit: megabits per second (Mbps)). In the graph 800, a situation is assumed in which the number of horizontal antenna ports of a base station 110 is 16, the number of vertical antenna ports of the base station 110 is 2, and the number of antenna ports of a terminal 120 is 4. Under a 32x4 MIMO cluster delay line (CDL)-B channel, a situation is assumed in which SCS = 30kHz, the number of RBs is 53, all RBs are scheduled, SNR = -20dB, and a speed of the UE is 0km/h. The channel is assumed to be a non-line of sight (NLOS) environment. A first line 801 represent transmission performance when using a precoder of an enhanced Type 2 codebook not using frequency compression. A second line 802 represents transmission performance when using the precoder of the enhanced Type 2 codebook using the frequency compression according to embodiments. A third line 803 represents transmission performance when using a Type 1 codebook. When the number of layers is 1, about 57% performance gain of the first line 801 compared to the third line 803 is identified.

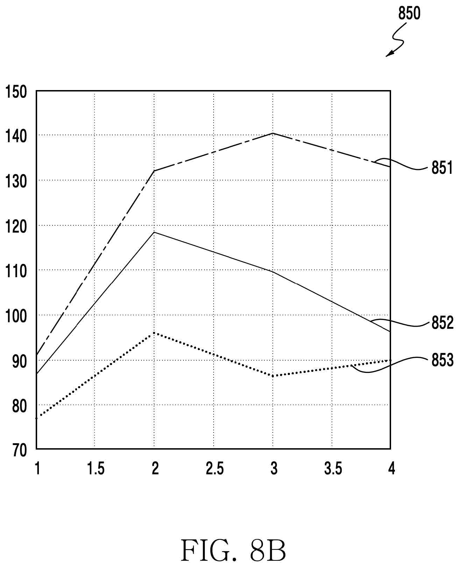

Referring to FIG. 8B, a graph 850 represents a throughput according to the number of layers. A horizontal axis of the graph 850 represents the number of layers. A vertical axis of the graph 850 represents a throughput (unit: Mbps). In the graph 850, a situation is assumed in which the number of horizontal antenna ports of the base station 110 is 16, the number of vertical antenna ports of the base station 110 is 2, and the number of antenna ports of the terminal 120 is 4. Under the 32x4 MIMO CDL-B channel, a situation is assumed in which SCS = 30kHz, the number of RBs is 53, all RBs are scheduled, SNR = 0dB, and the speed of the UE is 0km/h. The channel is assumed to be the NLOS environment. A first line 851 represents transmission performance when using the precoder of the enhanced Type 2 codebook not using the frequency compression. A second line 852 represents transmission performance when using the precoder of the enhanced Type 2 codebook using the frequency compression according to embodiments. A third line 853 illustrates transmission performance when using the Type 1 codebook. When the number of layers is 2, about 46% performance gain of the first line 851 compared to the third line 853 is identified.

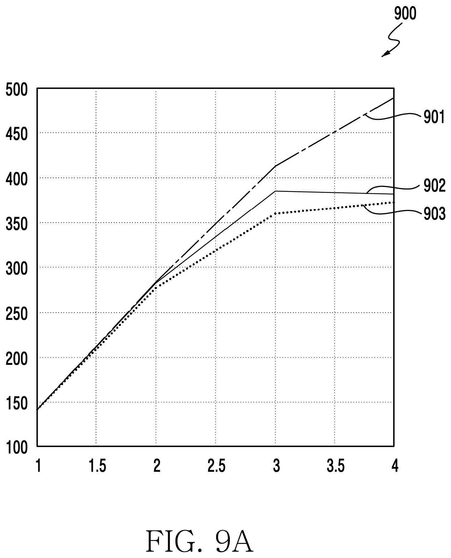

Referring to FIG. 9A, a graph 900 represents a throughput according to the number of layers. A horizontal axis of the graph 900 represents the number of layers. A vertical axis of the graph 900 represents a throughput (unit: Mbps). In the graph 900, a situation is assumed in which the number of horizontal antenna ports of the base station 110 is 16, the number of vertical antenna ports of the base station 110 is 2, and the number of antenna ports of the terminal 120 is 4. Under the 32x4 MIMO CDL-B channel, a situation is assumed in which SCS = 30kHz, the number of RBs is 53, all RBs are scheduled, SNR = 20dB, and the speed of the UE is 0km/h. The channel is assumed to be the NLOS environment. A first line 901 represents transmission performance when using the precoder of the enhanced Type 2 codebook not using the frequency compression. A second line 902 represents transmission performance when using the precoder of the enhanced Type 2 codebook using the frequency compression according to embodiments. A third line 903 represents transmission performance when using the Type 1 codebook. When the number of layers is 3, about 31% performance gain of the first line 901 compared to the third line 903 is identified.

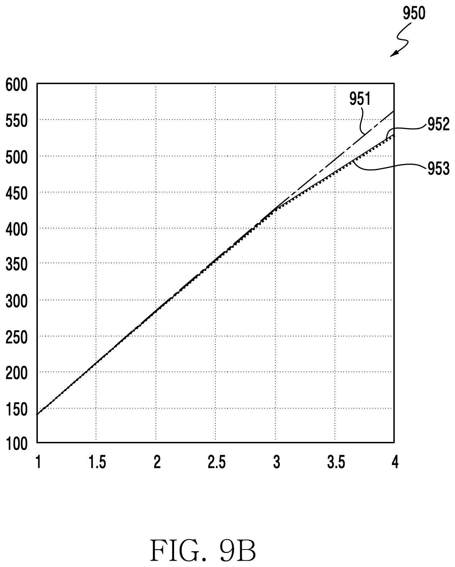

Referring to FIG. 9B, a graph 950 represents a throughput according to the number of layers. A horizontal axis of the graph 950 represents the number of layers. A vertical axis of the graph 950 represents a throughput (unit: Mbps). In the graph 950, a situation is assumed in which the number of horizontal antenna ports of the base station 110 is 16, the number of vertical antenna ports of the base station 110 is 2, and the number of antenna ports of the terminal 120 is 4. Under the 32x4 MIMO CDL-B channel, a situation is assumed in which SCS = 30kHz, the number of RBs is 53, all RBs are scheduled, SNR = 30dB, and the speed of the UE is 0km/h. The channel is assumed to be the NLOS environment. A first line 951 represents transmission performance when using the precoder of the enhanced Type 2 codebook not using the frequency compression. A second line 952 represents transmission performance when using the precoder of the enhanced Type 2 codebook using the frequency compression according to embodiments. A third line 953 represents transmission performance when using the Type 1 codebook. When the number of layers is 3, about 7% performance gain of the first line 951 compared to the third line 953 is identified.

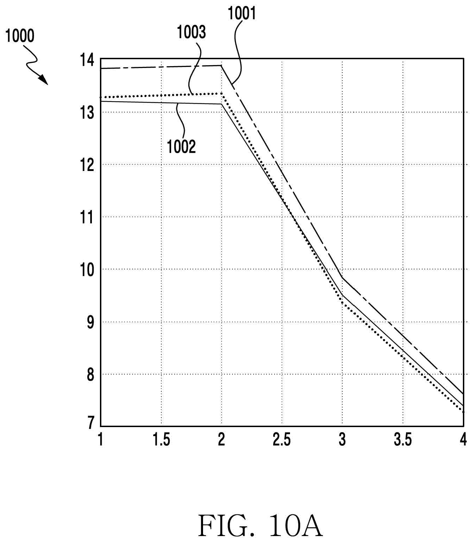

Referring to FIG. 10A, a graph 1000 represents a throughput according to the number of layers. A horizontal axis of the graph 1000 represents the number of layers. A vertical axis of the graph 1000 represents throughput (unit: Mbps). In the graph 1000, a situation is assumed in which the number of horizontal antenna ports of the base station 110 is 16, the number of vertical antenna ports of the base station 110 is 2, and the number of antenna ports of the terminal 120 is 4. Under a 32x4 MIMO CDL-D channel, a situation is assumed in which SCS = 30kHz, the number of RBs is 53, all RBs are scheduled, SNR = -20dB, and the speed of the UE is 0km/h. The channel is assumed to be a line of sight (LOS) environment. A first line 1001 represents transmission performance when using the precoder of the enhanced Type 2 codebook not using the frequency compression. A second line 1002 represents transmission performance when using the precoder of the enhanced Type 2 codebook using the frequency compression according to embodiments. A third line 1003 represents transmission performance when using the Type 1 codebook. When the number of layers is 1, about 4% performance gain of the first line 1001 compared to the third line 1003 is identified.

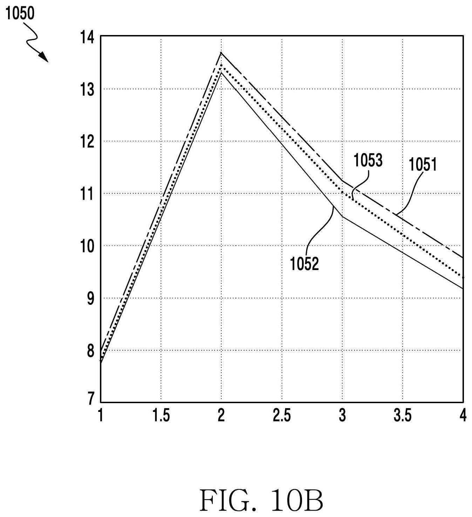

Referring to FIG. 10B, a graph 1050 represents a throughput according to the number of layers. A horizontal axis of the graph 1050 represents the number of layers. A vertical axis of the graph 1050 represents a throughput (unit: Mbps). In the graph 1050, a situation is assumed in which the number of horizontal antenna ports of the base station 110 is 16, the number of vertical antenna ports of the base station 110 is 2, and the number of antenna ports of the terminal 120 is 4. Under a 32x4 MIMO CDL-B channel, a situation is assumed in which SCS = 30kHz, the number of RBs is 53, all RBs are scheduled, SNR = 0dB, and the speed of the UE is 0km/h. The channel is assumed to be the LOS environment. A first line 1051 represents transmission performance when using the precoder of the enhanced Type 2 codebook not using the frequency compression. A second line 1052 represents transmission performance when using the precoder of the enhanced Type 2 codebook using the frequency compression according to embodiments. A third line 1053 represents transmission performance when using the Type 1 codebook. When the number of layers is 2, about 2% performance gain of the first line 1051 compared to the third line 1053 is identified.

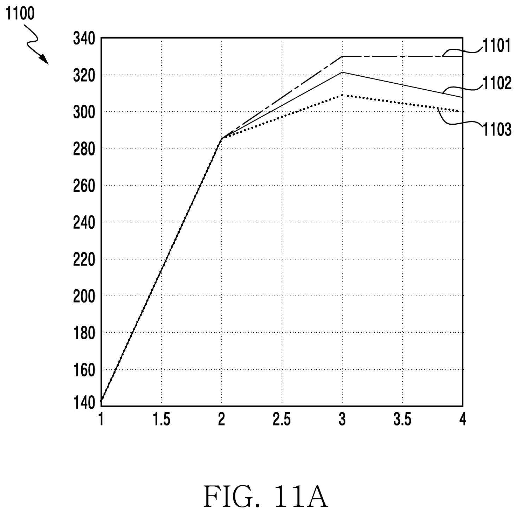

Referring to FIG. 11A, a graph 1100 represents a throughput according to the number of layers. A horizontal axis of the graph 1100 represents the number of layers. A vertical axis of the graph 1100 represents a throughput (unit: Mbps). In the graph 1100, a situation is assumed in which the number of horizontal antenna ports of the base station 110 is 16, the number of vertical antenna ports of the base station 110 is 2, and the number of antenna ports of the terminal 120 is 4. Under the 32x4 MIMO CDL-B channel, a situation is assumed in which SCS = 30kHz, the number of RBs is 53, all RBs are scheduled, SNR = 20dB, and the speed of the UE is 0km/h. The channel is assumed to be the LOS environment. A first line 1101 represents transmission performance when using the precoder of the enhanced Type 2 codebook not using the frequency compression. A second line 1102 represents transmission performance when using the precoder of the enhanced Type 2 codebook using the frequency compression according to embodiments. A third line 1103 represents transmission performance when using the Type 1 codebook. When the number of layers is 3, about 7% performance gain of the first line 1101 compared to the third line 1103 is identified.

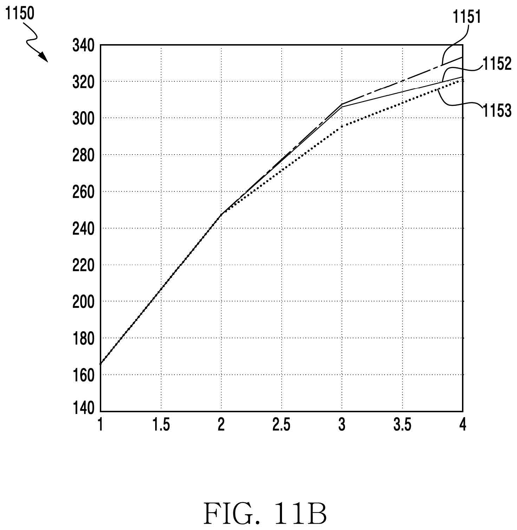

Referring to FIG. 11B, a graph 1150 represents a throughput according to the number of layers. A horizontal axis of the graph 1150 represents the number of layers. A vertical axis of the graph 1150 represents a throughput (unit: Mbps). In the graph 1150, a situation is assumed in which the number of horizontal antenna ports of the base station 110 is 16, the number of vertical antenna ports of the base station 110 is 2, and the number of antenna ports of the terminal 120 is 4. Under the 32x4 MIMO CDL-B channel, a situation is assumed in which SCS = 30kHz, the number of RBs is 53, all RBs are scheduled, SNR = 30dB, and the speed of the UE is 0km/h. The channel is assumed to be the LOS environment. A first line 1151 represents transmission performance when using the precoder of the enhanced Type 2 codebook not using the frequency compression. A second line 1152 represents transmission performance when using the precoder of the enhanced Type 2 codebook using the frequency compression according to embodiments. A third line 1153 represents transmission performance when using the Type 1 codebook. When the number of layers is 4, about 5% performance gain of the first line 1151 compared to the third line 1153 is identified.

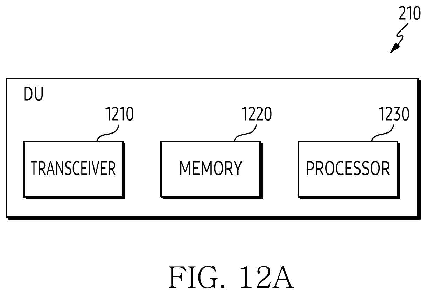

FIG. 12A illustrates functional components of a digital unit (DU) (e.g., a DU 210). A configuration illustrated in FIG. 12A may be understood as a configuration of the DU 210 of FIG. 12A as a portion of a base station. Hereinafter, terms such as '...unit' and '...equipment' mean a unit for processing at least one function or operation, and may be implemented by hardware, software, or a combination of hardware and software.

Referring to FIG. 12A, the DU 210 includes a transceiver 1210, memory 1220, and a processor 1230.

The transceiver 1210 may perform functions for transmitting and receiving a signal in a wired communication environment. The transceiver 1210 may include a wired interface for controlling a direct connection between devices through a transmission medium (e.g., a copper line, an optical fiber). For example, the transceiver 1210 may transmit an electrical signal to another device through a copper line, or may perform a conversion between an electrical signal and an optical signal. The DU 210 may perform communication with a radio unit (RU) through the transceiver 1210.

The transceiver 1210 may also perform functions for transmitting and receiving a signal in a wireless communication environment. For example, the transceiver 1210 may perform a function of converting between a baseband signal and a bit sequence according to a physical layer specification of a system. For example, when transmitting data, the transceiver 1210 generates complex symbols by encoding and modulating a transmission bit sequence. In addition, when receiving data, the transceiver 1210 restores a reception bit sequence through demodulation and decoding of a baseband signal. In addition, the transceiver 1210 may include a plurality of transmission and reception paths.

The transceiver 1210 may transmit and receive a signal. For example, the transceiver 1210 may transmit a management plane (M-plane) message. For example, the transceiver 1210 may transmit a management plane (S-plane) message. For example, the transceiver 1210 may transmit a control plane (C-plane) message. For example, the transceiver 1210 may transmit a user plane (U-plane) message. For example, the transceiver 1210 may receive the user plane message. Although only the transceiver 1210 is illustrated in FIG. 12A, according to another embodiment, the DU 210 may include two or more transceivers.

The transceiver 1210 transmits and receives a signal as described above. Accordingly, all or a portion of the transceiver 1210 may be referred to as a 'communication unit', a 'transmission unit', a 'reception unit', or a 'transceiver unit'. In addition, in the following description, transmission and reception performed through a radio channel are used to mean including that the processing as described above is performed by the transceiver 1210. According to an embodiment, the transceiver 1210 may obtain random access signals related to an NPRACH on which physical layer processing is performed from an RU (e.g., an RU 220). For example, the transceiver 1210 may obtain a signal (e.g., a frequency domain signal) on which CP removal and FFT for received signals are performed.

Although not illustrated in FIG. 12A, the transceiver 1210 may further include a backhaul transceiver for connecting to a core network or another base station. The backhaul transceiver may provide an interface for performing communication with other nodes in a network. That is, the backhaul transceiver converts a bit sequence transmitted from the base station to another node, for example, another access node, another base station, an upper node, or a core network, into a physical signal, and converts the physical signal received from the another node into a bit sequence.

The memory 1220 stores data such as a basic program, an application program, and configuration information for an operation of the DU 210. The memory 1220 may be referred to as a storage unit. The memory 1220 may be configured as a volatile memory, a non-volatile memory, or a combination of a volatile memory and a non-volatile memory. In addition, the memory 1220 may provide stored data according to a request of the processor 1230. The memory 1220 represents a storage space as a functional component. For example, the memory 1220 may be understood to represent not only memory (e.g., a hard disk, a flash memory, a RAM) disposed as a component within the DU 210, but also a space for storing instructions and/or programs.

The processor 1230 controls overall operations of the DU 210. The processor 1230 may be referred to as a control unit. For example, the processor 1230 transmits and receives a signal through the transceiver 1210 (or through a backhaul communication unit). In addition, the processor 1230 writes data to the memory 1220 and reads the data from the memory 1220. In addition, the processor 1230 may perform functions of a protocol stack required in a communication standard. Although only the processor 1230 is illustrated in FIG. 12A, according to another embodiment, the DU 210 may include two or more processors.

According to an embodiment, the processor 1230 may perform physical layer processing for signals received from the RU (e.g., the RU 220). For example, the processor 1230 may perform subcarrier demapping (RE demapping) for the received signals. For example, the processor 1230 may obtain a noise-interference component (e.g., a noise-interference covariance matrix) based on the received reference signals. In addition, for example, the processor 1230 may perform channel estimation based on the received reference signals. The processor 1230 may determine a weight for a combiner. The processor 1230 may determine data corresponding to an uplink signal.

The configuration of the DU 210 illustrated in FIG. 12A is only an example, and an example of a DU for performing embodiments of the present disclosure is not limited to the configuration illustrated in FIG. 12A. In some embodiments, some configurations may be added, deleted, or changed.

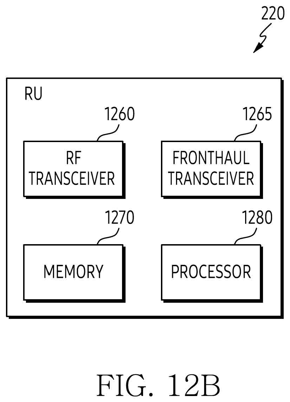

FIG. 12B illustrates functional components of a radio unit (RU). The configuration illustrated in FIG. 12B may be understood as the configuration of the RU 220 of FIG. 2 as a portion of the base station. Hereinafter, terms such as '...unit' and '...equipment' mean a unit for processing at least one function or operation, and may be implemented by hardware, software, or a combination of hardware and software.

Referring to FIG. 12B, an RU 220 includes an RF transceiver 1260, a fronthaul transceiver 1265, memory 1270, and a processor 1280.

The RF transceiver 1260 performs functions for transmitting and receiving a signal through a radio channel. For example, the RF transceiver 1260 up-converts a baseband signal into an RF band signal and then transmits the RF band signal through an antenna, and down-converts the RF band signal received through the antenna into a baseband signal. For example, the RF transceiver 1260 may include a transmission filter, a reception filter, an amplifier, a mixer, an oscillator, a DAC, and an ADC.

The RF transceiver 1260 may include a plurality of transmission and reception paths. Furthermore, the RF transceiver 1260 may include an antenna unit. The RF transceiver 1260 may include at least one antenna array configured with a plurality of antenna elements. In terms of hardware, the RF transceiver 1260 may be configured as digital circuitry and analog circuitry (e.g., a radio frequency integrated circuit (RFIC)). Herein, the digital circuitry and the analog circuitry may be implemented as one package. In addition, the RF transceiver 1260 may include a plurality of RF chains. The RF transceiver 1260 may perform beamforming. The RF transceiver 1260 may apply a beamforming weight to a signal to provide directionality according to a configuration of the processor 1280 to the signal to be transmitted and received. According to an embodiment, the RF transceiver 1260 may include a plurality of antennas.

According to an embodiment, the RF transceiver 1260 may transmit and receive a signal on a radio access network. For example, the RF transceiver 1260 may transmit a downlink signal. The downlink signal may include a synchronization signal (SS), a reference signal (RS) (e.g., a cell-specific reference signal (CRS), a demodulation (DM)-RS), system information (e.g., MIB, SIB, remaining system information (RMSI), other system information (OSI)), a configuration message, control information, or downlink data, and the like. In addition, for example, the RF transceiver 1260 may receive an uplink signal. For example, the uplink signal may include a random access related signal (e.g., an NPRACH, an NPUSCH). According to an embodiment, the RF transceiver 1260 may receive signals including a random access signal through the plurality of antennas included in the RF transceiver 1260. Although only the RF transceiver 1260 is illustrated in FIG. 12B, according to another embodiment, the RU 220 may include two or more RF transceivers.

The fronthaul transceiver 1265 may transmit and receive a signal. According to an embodiment, the fronthaul transceiver 1265 may transmit and receive a signal on a fronthaul interface. For example, the fronthaul transceiver 1265 may receive a management plane (M-plane) message. For example, the fronthaul transceiver 1265 may receive a management plane (S-plane) message. For example, the fronthaul transceiver 1265 may receive a control plane (C-plane) message. For example, the fronthaul transceiver 1265 may transmit a user plane (U-plane) message. For example, the fronthaul transceiver 1265 may receive the user plane message. According to an embodiment, the fronthaul transceiver 1265 may transmit, to the DU (e.g., the DU 210), a signal (e.g., a frequency domain signal) on which CP removal and FFT are performed. Although only the fronthaul transceiver 1265 is illustrated in FIG. 12B, according to another embodiment, the RU 220 may include two or more fronthaul transceivers.

The RF transceiver 1260 and the fronthaul transceiver 1265 transmit and receive a signal as described above. Accordingly, all or a portion of the RF transceiver 1260 and the fronthaul transceiver 1265 may be referred to as a 'communication unit', a 'transmission unit', a 'reception unit', or a 'transceiver unit'. In addition, in the following description, transmission and reception performed through a radio channel are used to mean including that the processing as described above is performed by the RF transceiver 1260. In the following description, the transmission and the reception performed through a radio channel are used to mean including that the processing as described above is performed by the RF transceiver 1260.

The memory 1270 stores data such as a basic program, an application program, and configuration information for an operation of the RU 220. The memory 1270 may be referred to as a storage unit. The memory 1270 may be configured as a volatile memory, a non-volatile memory, or a combination of a volatile memory and a non-volatile memory. In addition, the memory 1270 may provide stored data according to a request of the processor 1280. The memory 1270 represents a storage space as a functional component. For example, the memory 1270 may be understood to represent not only memory (e.g., a hard disk, a flash memory, a RAM) disposed as a component within the RU 220, but also a space for storing instructions and/or programs.

The processor 1280 controls overall operations of the RU 220. The processor 1280 may be referred to as a control unit. For example, the processor 1280 transmits and receives a signal through the RF transceiver 1260 or the fronthaul transceiver 1265. In addition, the processor 1280 writes data to the memory 1270 and reads the data from the memory 1270. In addition, the processor 1280 may perform functions of a protocol stack required in a communication standard. Although only the processor 1280 is illustrated in FIG. 12B, according to another embodiment, the RU 220 may include two or more processors. The processor 1280 may be a set of instructions or code stored in the memory 1270, which resides at least temporarily in the processor 1280, or may be a storage space storing the instructions/code or a portion of circuitry configuring the processor 1280. In addition, the processor 1280 may include various modules for performing communication. The processor 1280 may control the RU 220 to perform operations according to embodiments to be described later.

The configuration of the RU 220 illustrated in FIG. 12B is only an example, and an example of an RU for performing embodiments of the present disclosure is not limited to the configuration illustrated in FIG. 12B. In some embodiments, some configurations may be added, deleted, or changed.

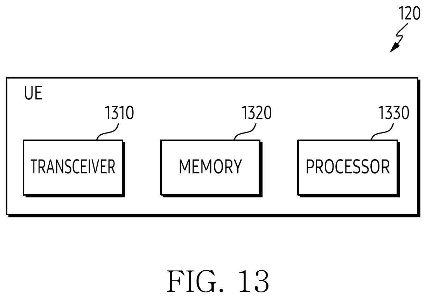

FIG. 13 illustrates functional components of a terminal (e.g., a terminal 120).

Referring to FIG. 13, the terminal 120 may include a transceiver 1310, memory 1320, and a processor 1330. The transceiver 1310 performs functions for transmitting and receiving a signal through a radio channel. For example, the transceiver 1310 performs a function of converting between a baseband signal and a bit sequence according to a physical layer specification of a system. For example, when transmitting data, the transceiver 1310 generates complex symbols by encoding and modulating a transmission bit sequence. In addition, when receiving data, the transceiver 1310 restores a reception bit sequence through demodulation and decoding of a baseband signal. In addition, the transceiver 1310 up-converts a baseband signal into a radio frequency (RF) band signal and then transmits the RF band signal through an antenna, and down-converts the RF band signal received through the antenna into a baseband signal. For example, the transceiver 1310 may include a transmission filter, a reception filter, an amplifier, a mixer, an oscillator, a digital-to-analog converter (DAC), and an analog-to-digital converter (ADC).

The transceiver 1310 may include a plurality of transmission and reception paths. Furthermore, the transceiver 1310 may include an antenna unit. The transceiver 1310 may include at least one antenna array configured with a plurality of antenna elements. In terms of hardware, the transceiver 1310 may be configured as digital circuitry and analog circuitry (e.g., a radio frequency integrated circuit (RFIC)). Herein, the digital circuitry and the analog circuitry may be implemented as one package. In addition, the transceiver 1310 may include a plurality of RF chains. The transceiver 1310 may perform beamforming. The transceiver 1310 may apply a beamforming weight to a signal to provide directionality according to a configuration of the processor 1330 to the signal to be transmitted and received. According to an embodiment, the transceiver 1310 may include a radio frequency (RF) block (or an RF unit). The RF block may include first RF circuitry related to an antenna and second RF circuitry related to baseband processing. The first RF circuitry may be referred to as an RF-antenna (A). The second RF circuitry may be referred to as RF-baseband (B).

The transceiver 1310 may transmit and receive a signal. To this end, the transceiver 1310 may include at least one transceiver. The transceiver 1310 may receive a downlink signal. The downlink signal may include a synchronization signal (SS), a reference signal (RS) (e.g., a cell-specific reference signal (CRS), a demodulation (DM)-RS), system information (e.g., MIB, SIB, remaining system information (RMSI), other system information (OSI)), a configuration message, control information, or downlink data, and the like. In addition, the transceiver 1310 may transmit an uplink signal. The uplink signal may include a random access related signal (e.g., a random access preamble (RAP) (or message 1 (Msg1), message 3 (Msg3)), a reference signal (e.g., a sounding reference signal (SRS), DM-RS), or a power headroom report (PHR), and the like.

In addition, the transceiver 1310 may include different communication modules to process signals of different frequency bands. Furthermore, the transceiver 1310 may include a plurality of communication modules to support a plurality of different radio access technologies. For example, the different radio access technologies may include a bluetooth low energy (BLE), Wireless Fidelity (Wi-Fi), WiFi Gigabyte (WiGig), and a cellular network (e.g., Long Term Evolution (LTE), new radio (NR)). In addition, the different frequency bands may include a super high frequency (SHF) band (e.g., 2.5GHz, 5GHz) and a millimeter wave band (e.g., 38GHz, 60GHz). In addition, the transceiver 1310 may use the same radio access technology on different frequency bands (e.g., an unlicensed band for a licensed Assisted Access (LAA), a citizens broadband radio service (CBRS) (e.g., 3.5 GHz)).

The transceiver 1310 transmits and receives a signal as described above. Accordingly, all or a portion of the transceiver 1310 may be referred to as a 'transmission unit', a 'reception unit', or a 'transceiver unit'. In addition, in the following description, transmission and reception performed through a radio channel are used to mean including that the processing as described above is performed by the transceiver 1310.

The memory 1320 stores data such as a basic program, an application program, and configuration information for an operation of the terminal 120. The memory 1320 may be configured as a volatile memory, a non-volatile memory, or a combination of a volatile memory and a non-volatile memory. In addition, the memory 1320 provides stored data according to a request of the processor 1330. According to an embodiment, the memory 1320 may store codebooks for CSI reporting. Each of the codebooks may include information on precoding matrices. The memory 1320 represents a storage space as a functional component. For example, the memory 1320 may be understood to represent not only memory (e.g., a hard disk, a flash memory, a RAM) disposed as a component within the terminal 120, but also a space for storing instructions and/or programs.

The processor 1330 controls overall operations of the terminal 120. For example, the processor 1330 transmits and receives a signal through the transceiver 1310. In addition, the processor 1330 writes data to the memory 1320 and reads the data from the memory 1320. In addition, the processor 1330 may perform functions of a protocol stack required in a communication standard. To this end, the processor 1330 may include at least one processor. The processor 1330 may include at least one processor or a micro processor, or may be a portion of the processor. In addition, a portion of the transceiver 1310 and the processor 1330 may be referred to as a CP. The processor 1330 may include various modules for performing communication. The processor 1330 may control the terminal 120 to perform operations according to embodiments described above.

In embodiments, a device of a digital unit (DU) is provided. The device may comprise a transceiver, memory storing instructions, and a processor. The instructions may cause, when executed by the processor, the device to obtain a channel frequency response through reference signals from a terminal, obtain eigen vectors through eigen decomposition for the channel frequency response, obtain transformation vectors by performing a two-dimensional (2D) Fourier transform on the eigen vectors, identify basis vectors among a plurality of basis vectors for an enhanced Type 2 codebook through a decision metric according to the transformed vectors, determine a precoding matrix using the identified basis vectors, and transmit, through a radio unit (RU) to the terminal, downlink data to which the precoding matrix is applied.

According to an embodiment, the plurality of basis vectors for the enhanced Type 2 codebook may be determined based on the number of transmit antennas in a first dimension, the number of transmit antennas in a second dimension, a first oversampling factor, and a second oversampling factor.

According to an embodiment, the reference signals may include sounding reference signals (SRSs), and the 2D Fourier transform may comprise a fast Fourier transform (FFT) according to the number of transmit antennas in the first dimension and the number of transmit antennas in the second dimension.

According to an embodiment, the decision metric according to the transformation vectors may indicate a sum of magnitudes of the transformation vectors, and the identified basis vectors may be identified as top L basis vectors, when the decision metrics are sorted in descending order, among the plurality of basis vectors for the enhanced Type 2 codebook.

According to an embodiment, the instructions may cause, when executed by the processor, the device to determine beam coefficients for the enhanced Type2 codebook, through subband eigen vectors and the identified basis vectors among the eigne vectors, and determine the precoding matrix using the beam coefficients and the identified basis vectors, and the beam coefficients may include an amplitude coefficient per layer and a phase coefficient per layer, in each subband.

According to an embodiment, the instructions may cause, when executed by the processor, the device to obtain first eigen vectors for a wideband (WB) through an eigen decomposition according to a bandwidth part (BWP), and obtain second eigen vectors for a subband (SB) through an eigen decomposition according to each subband of subbands of the BWP.

According to an embodiment, the eigen vectors may include the first eigen vectors and the second eigen vectors, the first eigen vectors may be used to identify the basis vectors among the plurality of eigen vectors for the enhanced Type2 codebook, and the second eigen vectors may be used to identify beam coefficients for the enhanced Type2 codebook.

In embodiments, a terminal is provided. The terminal may include a transceiver, memory storing instructions, and a processor. The instructions may cause, when executed by the processor, the device to receive, from a network node, reference signals through the transceiver, obtain a channel frequency response through the reference signals, obtain eigen vectors through eigen decomposition for the channel frequency response, obtain transformation vectors by performing a two-dimensional (2D) Fourier transform on the eigen vectors, identify basis vectors among a plurality of basis vectors for an enhanced Type 2 codebook through a decision metric according to the transformation vectors, determine a precoding matrix using the identified basis vectors, and transmit, through the transceiver to the network node, channel state information including the precoding matrix.

According to an embodiment, the plurality of basis vectors for the enhanced Type 2 codebook may be determined based on the number of transmit antennas in a first dimension, the number of transmit antennas in a second dimension, a first oversampling factor, and a second oversampling factor, the number of transmit antennas in a first dimension, the number of transmit antennas in the second dimension, the first oversampling factor, and the second oversampling factor may be configured from codebook configuration of the network node, and the codebook configuration may be obtained through a radio resource control (RRC) message.

According to an embodiment, the reference signals may include channel state information-reference signals (CSI-RSs), and the 2D Fourier transform may comprise a fast Fourier transform (FFT) according to the number of transmit antennas in the first dimension and the number of transmit antennas in the second dimension.

According to an embodiment, the decision metric may indicate a sum of magnitudes of the transform vectors, and the identified basis vectors may be identified as top L basis vectors, when the decision metrics are sorted in descending order, among the plurality of basis vectors for the enhanced Type 2 codebook.

According to an embodiment, the instructions may cause, when executed by the processor, the device to determine beam coefficients for the enhanced Type2 codebook, through subband eigen vectors and the identified basis vectors among the eigne vectors, and determine the precoding matrix using the beam coefficients and the identified basis vectors, and the beam coefficients may include an amplitude coefficient per layer and a phase coefficient per layer.

According to an embodiment, the instructions may cause, when executed by the processor, the device to obtain first eigen vectors for wideband (WB) through an eigen decomposition according to a bandwidth part (BWP), and obtain second eigen vectors for subband (SB) through an eigen decomposition according to subbands of the BWP.

According to an embodiment, the eigen vectors may include the first eigen vectors and the second eigen vectors, the first eigen vectors may be used to identify the basis vectors among the plurality of eigen vectors for the enhanced Type2 codebook, and the second eigen vectors may be used to identify beam coefficients for the enhanced Type2 codebook.

In embodiments, a method performed by a digital unit (DU) is provided. The method may comprise obtaining a channel frequency response through reference signals from a terminal, obtaining eigen vectors through eigen decomposition for the channel frequency response, obtaining transformation vectors by performing a two-dimensional (2D) Fourier transform on the eigen vectors, identifying basis vectors among a plurality of basis vectors for an enhanced Type 2 codebook through a decision metric according to the transformation vectors, determining a precoding matrix using the identified basis vectors, and transmitting, through a radio unit (RU) to the terminal, downlink data to which the precoding matrix is applied.

According to an embodiment, the plurality of basis vectors for the enhanced Type 2 codebook may be determined based on the number of transmit antennas in a first dimension, the number of transmit antennas in a second dimension, a first oversampling factor, and a second oversampling factor.

According to an embodiment, the reference signals may include sounding reference signals (SRSs), and the 2D Fourier transform may comprise a fast Fourier transform (FFT) according to the number of transmit antennas in the first dimension and the number of transmit antennas in the second dimension.

According to an embodiment, the decision metric according to the transformation vectors may indicate a sum of magnitudes of the transformation vectors, and the identified basis vectors may be identified as top L basis vectors, when the decision metrics are sorted in descending order, among the plurality of basis vectors for the enhanced Type 2 codebook.

According to an embodiment, the determining the precoding matrix may comprise determining beam coefficients for the enhanced Type2 codebook, through subband eigen vectors and the identified basis vectors among the eigne vectors, and determining the precoding matrix using the beam coefficients and the identified basis vectors. The beam coefficients may include an amplitude coefficient per layer and a phase coefficient per layer, in each subband.

According to an embodiment, obtaining the eigen vectors may comprise obtaining first eigen vectors for a wideband (WB) through an eigen decomposition according to a bandwidth part (BWP), and obtaining second eigen vectors for a subband (SB) through an eigen decomposition according to each subband of subbands of the BWP.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. For another example, circuitry associated with user equipment (UE), a base station, a network element, or the like, as described above in association with one or more of the preceding drawings, may be configured to operate according to one or more examples described herein.

Any of the embodiments described above may be combined with any other embodiment (or a combination of embodiments) unless explicitly stated otherwise. The foregoing description of one or more implementations is provided for illustration and description, and is not intended to limit the scope of the embodiments or to be exhaustive to the precise forms disclosed. Modifications and variations are possible in light of the above teachings or may be obtained from practice of various embodiments.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A device of a digital unit (DU), comprising:

   a transceiver;
   memory storing instructions; and
   a processor,
   wherein the instructions cause, when executed by the processor, the device to:

   obtain a channel frequency response through reference signals from a terminal;
   obtain eigen vectors through eigen decomposition for the channel frequency response;
   obtain transformation vectors by performing a two-dimensional (2D) Fourier transform on the eigen vectors;
   identify basis vectors among a plurality of basis vectors for an enhanced Type 2 codebook through a decision metric according to the transformation vectors;
   determine a precoding matrix using the identified basis vectors; and
   transmit, through a radio unit (RU) to the terminal, downlink data to which the precoding matrix is applied.

2. The device of claim 1, wherein the plurality of basis vectors for the enhanced Type 2 codebook is determined based on the number of transmit antennas in a first dimension, the number of transmit antennas in a second dimension, a first oversampling factor, and a second oversampling factor.

3. The device of claim 2,

   wherein the reference signals include sounding reference signals (SRSs), and
   wherein the 2D Fourier transform comprises a fast Fourier transform (FFT) according to the number of transmit antennas in the first dimension and the number of transmit antennas in the second dimension.

4. The device of claim 3,

   wherein the decision metric according to the transformation vectors indicates a sum of magnitudes of the transformation vectors, and
   wherein the identified basis vectors are identified as top L basis vectors, when the decision metrics are sorted in descending order, among the plurality of basis vectors for the enhanced Type 2 codebook.

5. The device of claim 3, wherein the instructions cause, when executed by the processor, the device to:

   determine beam coefficients for the enhanced Type2 codebook, through subband eigen vectors and the identified basis vectors among the eigne vectors, and
   determine the precoding matrix using the beam coefficients and the identified basis vectors, and
   wherein the beam coefficients include an amplitude coefficient per layer and a phase coefficient per layer, in each subband.

6. The device of claim 1, wherein the instructions cause, when executed by the processor, the device to:

   obtain first eigen vectors for a wideband (WB) through an eigen decomposition according to a bandwidth part (BWP), and
   obtain second eigen vectors for a subband (SB) through an eigen decomposition according to each subband of subbands of the BWP.

7. The device of claim 6,

wherein the eigen vectors includes the first eigen vectors and the second eigen vectors, wherein the first eigen vectors are used to identify the basis vectors among the plurality of eigen vectors for the enhanced Type2 codebook, and
wherein the second eigen vectors are used to identify beam coefficients for the enhanced Type2 codebook.

8. A terminal comprising:

a transceiver;
memory storing instructions; and
a processor,
wherein the instructions cause, when executed by the processor, the terminal to:

receive, from a network node, reference signals through the transceiver,
obtain a channel frequency response through the reference signals;
obtain eigen vectors through eigen decomposition for the channel frequency response;
obtain transformation vectors by performing a two-dimensional (2D) Fourier transform on the eigen vectors;
identify basis vectors among a plurality of basis vectors for an enhanced Type 2 codebook through a decision metric according to the transformation vectors;
determine a precoding matrix using the identified basis vectors; and
transmit, through the transceiver to the network node, channel state information including the precoding matrix.

9. The terminal of claim 8, wherein the plurality of basis vectors for the enhanced Type 2 codebook is determined based on the number of transmit antennas in a first dimension, the number of transmit antennas in a second dimension, a first oversampling factor, and a second oversampling factor,

wherein the number of transmit antennas in a first dimension, the number of transmit antennas in the second dimension, the first oversampling factor, and the second oversampling factor are configured from codebook configuration of the network node, and
wherein the codebook configuration is obtained through a radio resource control (RRC) message.

10. The terminal of claim 9,

wherein the reference signals include channel state information-reference signals (CSI-RSs),
wherein the 2D Fourier transform comprises a fast Fourier transform (FFT) according to the number of transmit antennas in the first dimension and the number of transmit antennas in the second dimension.

11. The terminal of claim 10,

wherein the decision metric indicates a sum of magnitudes of the transform vectors, and
wherein the identified basis vectors are identified as top L basis vectors, when the decision metrics are sorted in descending order, among the plurality of basis vectors for the enhanced Type 2 codebook.

12. The terminal of claim 10, wherein the instructions cause, when executed by the processor, the terminal to:

determine beam coefficients for the enhanced Type2 codebook, through subband eigen vectors and the identified basis vectors among the eigne vectors, and
determine the precoding matrix using the beam coefficients and the identified basis vectors, and
wherein the beam coefficients include an amplitude coefficient per layer and a phase coefficient per layer.

13. The terminal of claim 8, wherein the instructions cause, when executed by the processor, the terminal to:

obtain first eigen vectors for wideband (WB) through an eigen decomposition according to a bandwidth part (BWP), and
obtain second eigen vectors for subband (SB) through an eigen decomposition according to subbands of the BWP.

**14.** The terminal of claim 13,

wherein the eigen vectors includes the first eigen vectors and the second eigen vectors,
wherein the first eigen vectors are used to identify the basis vectors among the plurality of eigen vectors for the enhanced Type2 codebook, and
wherein the second eigen vectors are used to identify beam coefficients for the enhanced Type2 codebook.

**15.** A method performed by a digital unit (DU), the method comprising:

obtaining a channel frequency response through reference signals from a terminal;
obtaining eigen vectors through eigen decomposition for the channel frequency response;
obtaining transformation vectors by performing a two-dimensional (2D) Fourier transform on the eigen vectors;
identifying basis vectors among a plurality of basis vectors for an enhanced Type 2 codebook through a decision metric according to the transformation vectors;
determining a precoding matrix using the identified basis vectors; and
transmitting, through a radio unit (RU) to the terminal, downlink data to which the precoding matrix is applied.

FIG. 1

110

210 215 220

DU — RU

FIG. 2

RADIO FRAME (314)

SLOT (306)

$N_{RB}^{DL}$ OR $N_{RB}^{UL}$ SUBCARRIERS (304)

$N_{SC}^{RB}$ SUBCARRIERS (310)

RESOURCE ELEMENT (312)

RESORCE BLOCK (308)

$N_{symb}$ OFDM SYMBOLS (302)

FIG. 3

FIG. 4

FIG. 5A

551

Subbands

DFT vectors

552

FIG. 5B

FIG. 5C

FIG. 6

BS
(110)

UE
(120)

SRS (701)

PRECODER SELECTION BASED ON
ENHANCED TYPE 2 CODEBOOK (703)

DATA TRANSMISSION (705)

FIG. 7

FIG. 8A

FIG. 8B

FIG. 9A

FIG. 9B

FIG. 10A

FIG. 10B

FIG. 11A

FIG. 11B

210

```
┌─────────────────────────────────────────────────────────┐
│ DU                                                       │
│        1210              1220              1230           │
│   ┌──────────────┐  ┌──────────────┐  ┌──────────────┐   │
│   │ TRANSCEIVER  │  │   MEMORY     │  │  PROCESSOR   │   │
│   └──────────────┘  └──────────────┘  └──────────────┘   │
└─────────────────────────────────────────────────────────┘
```

FIG. 12A

220

RU

RF TRANSCEIVER 1260

FRONTHAUL TRANSCEIVER 1265

MEMORY 1270

PROCESSOR 1280

FIG. 12B

FIG. 13

## INTERNATIONAL SEARCH REPORT

| International application No. |
| --- |
| **PCT/KR2024/016838** |

| A. | CLASSIFICATION OF SUBJECT MATTER |
| --- | --- |

**H04B 7/0456**(2017.01)i; **H04B 7/06**(2006.01)i; **H04W 72/0457**(2023.01)i; **H04L 5/00**(2006.01)i; **H04L 25/02**(2006.01)i; **H04L 27/26**(2006.01)i; **H04W 88/08**(2009.01)i

According to International Patent Classification (IPC) or to both national classification and IPC

| B. | FIELDS SEARCHED |
| --- | --- |

Minimum documentation searched (classification system followed by classification symbols)

H04B 7/0456(2017.01); H04B 7/0417(2017.01); H04B 7/06(2006.01); H04L 1/00(2006.01); H04L 25/02(2006.01); H04L 25/03(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 주파수 응답(channel frequency response), 고유치 분해(eigen decomposition), 고유 벡터(eigen vector), 2차원 푸리에 변환(two dimensional fourier transform), 결정 메트릭(decision metric), 기저 벡터(basis vector)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2019-218317 A1 (NOKIA SHANGHAI BELL CO., LTD. et al.) 21 November 2019 (2019-11-21)<br>See paragraphs [0022]-[0031]; and figure 1. | 1-15 |
| A | US 2023-0155642 A1 (SAMSUNG ELECTRONICS CO., LTD.) 18 May 2023 (2023-05-18)<br>See paragraphs [0051]-[0136]; and figures 1-5. | 1-15 |
| A | CN 116743217 A (HUAWEI TECHNOLOGIES CO., LTD.) 12 September 2023 (2023-09-12)<br>See claims 1-11. | 1-15 |
| A | CN 110677361 A (BEIJING UNIVERSITY OF POSTS AND TELECOMMUNICATIONS) 10 January 2020 (2020-01-10)<br>See paragraphs [0090]-[0113]; and figure 4. | 1-15 |
| A | US 2023-0041413 A1 (HUAWEI TECHNOLOGIES CO., LTD.) 09 February 2023 (2023-02-09)<br>See paragraphs [0112]-[0180]; and figures 1-9. | 1-15 |

☐ Further documents are listed in the continuation of Box C.    ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 February 2025** | **24 February 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2024/016838** |

| Patent document cited in search report | | | Publication date (day/month/year) | Patent family member(s) | | | Publication date (day/month/year) |
|---|---|---|---|---|---|---|---|
| WO | 2019-218317 | A1 | 21 November 2019 | CN | 112119617 | A | 22 December 2020 |
| | | | | CN | 112119617 | B | 25 April 2023 |
| | | | | EP | 3794785 | A1 | 24 March 2021 |
| US | 2023-0155642 | A1 | 18 May 2023 | CN | 116137543 | A | 19 May 2023 |
| | | | | DE | 102022125012 | A1 | 17 May 2023 |
| | | | | KR | 10-2023-0071728 | A | 23 May 2023 |
| | | | | TW | 202322586 | A | 01 June 2023 |
| | | | | US | 11909472 | B2 | 20 February 2024 |
| | | | | US | 2024-0195466 | A1 | 13 June 2024 |
| CN | 116743217 | A | 12 September 2023 | EP | 4478621 | A1 | 18 December 2024 |
| | | | | US | 2024-0421866 | A1 | 19 December 2024 |
| | | | | WO | 2023-165458 | A1 | 07 September 2023 |
| CN | 110677361 | A | 10 January 2020 | CN | 110677361 | B | 28 August 2020 |
| US | 2023-0041413 | A1 | 09 February 2023 | CN | 111108706 | A | 05 May 2020 |
| | | | | CN | 111108706 | B | 21 September 2021 |
| | | | | CN | 111937031 | A | 13 November 2020 |
| | | | | CN | 111937031 | B | 28 May 2024 |
| | | | | CN | 111937032 | A | 13 November 2020 |
| | | | | CN | 111937032 | B | 27 August 2024 |
| | | | | CN | 114008613 | A | 01 February 2022 |
| | | | | CN | 114039635 | A | 11 February 2022 |
| | | | | CN | 114039635 | B | 09 April 2024 |
| | | | | CN | 114041162 | A | 11 February 2022 |
| | | | | CN | 114097002 | A | 25 February 2022 |
| | | | | CN | 114424102 | A | 29 April 2022 |
| | | | | CN | 114424102 | B | 07 May 2024 |
| | | | | DE | 202018006284 | U1 | 26 November 2019 |
| | | | | EP | 3571663 | A1 | 27 November 2019 |
| | | | | EP | 3571663 | B1 | 19 August 2020 |
| | | | | EP | 3588430 | A1 | 01 January 2020 |
| | | | | EP | 3588432 | A1 | 01 January 2020 |
| | | | | EP | 3682568 | A1 | 22 July 2020 |
| | | | | EP | 3682568 | B1 | 29 November 2023 |
| | | | | EP | 3716199 | A1 | 30 September 2020 |
| | | | | EP | 3716199 | B1 | 10 January 2024 |
| | | | | EP | 3716200 | A1 | 30 September 2020 |
| | | | | EP | 3716200 | B1 | 11 October 2023 |
| | | | | EP | 3742391 | A1 | 25 November 2020 |
| | | | | EP | 3776452 | A1 | 17 February 2021 |
| | | | | EP | 3776453 | A1 | 17 February 2021 |
| | | | | ES | 2820228 | T3 | 20 April 2021 |
| | | | | JP | 2021-519973 | A | 12 August 2021 |
| | | | | JP | 2021-519974 | A | 12 August 2021 |
| | | | | JP | 2022-538124 | A | 31 August 2022 |
| | | | | JP | 2022-538406 | A | 02 September 2022 |
| | | | | JP | 2022-541743 | A | 27 September 2022 |
| | | | | JP | 2022-546461 | A | 04 November 2022 |
| | | | | JP | 7391865 | B2 | 05 December 2023 |
| | | | | JP | 7436379 | B2 | 21 February 2024 |
| | | | | US | 11424853 | B2 | 23 August 2022 |

Form PCT/ISA/210 (patent family annex) (July 2022)

**INTERNATIONAL SEARCH REPORT**
Information on patent family members

| International application No. |
|---|
| **PCT/KR2024/016838** |

| Patent document cited in search report | Publication date (day/month/year) | Patent family member(s) | | | Publication date (day/month/year) |
|---|---|---|---|---|---|
| | | US | 11669940 | B2 | 06 June 2023 |
| | | US | 11854166 | B2 | 26 December 2023 |
| | | US | 11923975 | B2 | 05 March 2024 |
| | | US | 2020-0228232 | A1 | 16 July 2020 |
| | | US | 2021-0118101 | A1 | 22 April 2021 |
| | | US | 2021-0118102 | A1 | 22 April 2021 |
| | | US | 2022-0253983 | A1 | 11 August 2022 |
| | | US | 2022-0277441 | A1 | 01 September 2022 |
| | | US | 2022-0327670 | A1 | 13 October 2022 |
| | | US | 2022-0357558 | A1 | 10 November 2022 |
| | | WO | 2019-066676 | A1 | 04 April 2019 |
| | | WO | 2019-185174 | A1 | 03 October 2019 |
| | | WO | 2019-185912 | A1 | 03 October 2019 |
| | | WO | 2019-185916 | A1 | 03 October 2019 |
| | | WO | 2020-254574 | A1 | 24 December 2020 |
| | | WO | 2020-260152 | A1 | 30 December 2020 |
| | | WO | 2021-005098 | A1 | 14 January 2021 |
| | | WO | 2021-038103 | A1 | 04 March 2021 |

Form PCT/ISA/210 (patent family annex) (July 2022)